(19) Europäisches Patentamt / European Patent Office / Office européen des brevets

(11) **EP 4 170 549 B1**

(12) # EUROPEAN PATENT SPECIFICATION

(45) Date of publication and mention of the grant of the patent:
**30.09.2026 Bulletin 2026/40**

(21) Application number: **22186219.6**

(22) Date of filing: **21.07.2022**

(51) International Patent Classification (IPC):
***G06N 3/0464*** *(2023.01)* ***G06N 3/082*** *(2023.01)*
***G06N 3/084*** *(2023.01)*

(52) Cooperative Patent Classification (CPC):
**G06N 3/0464;** G06N 3/082; G06N 3/084

(54) **MACHINE LEARNING PROGRAM, METHOD FOR MACHINE LEARNING, AND INFORMATION PROCESSING APPARATUS**

MASCHINENLERNPROGRAMM, VERFAHREN FÜR DAS MASCHINENLEREN UND INFORMATIONSVERARBEITUNGSVORRICHTUNG

PROGRAMME D'APPRENTISSAGE MACHINE, PROCÉDÉ D'APPRENTISSAGE MACHINE ET APPAREIL D'APPRENTISSAGE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2021 JP 2021174063**

(43) Date of publication of application:
**26.04.2023 Bulletin 2023/17**

(73) Proprietor: **FUJITSU LIMITED**
**Kawasaki-shi, Kanagawa 211-8588 (JP)**

(72) Inventor: **Sakai, Yasufumi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
**US-B2- 10 832 135**

- **SINGH PRAVENDRA ET AL: "Play and Prune: Adaptive Filter Pruning for Deep Model Compression", ARXIV.ORG, 11 May 2019 (2019-05-11), Ithaca, pages 1 - 7, XP093007471, Retrieved from the Internet <URL:https://arxiv.org/pdf/1905.04446.pdf> [retrieved on 20221213]**
- **PAVLO MOLCHANOV ET AL: "PRUNING CONVOLUTIONAL NEURAL NETWORKS FOR RESOURCE EFFICIENT INFERENCE", 8 June 2017 (2017-06-08), pages 1 - 17, XP055507236, Retrieved from the Internet <URL:https://arxiv.org/pdf/1611.06440.pdf> [retrieved on 20180914]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 170 549 B1

## Description

TECHNICAL FIELD

The embodiments discussed herein are related to a machine learning program, a method for machine learning, and an information processing apparatus.

BACKGROUND ART

NNs (Neural Networks), which are used for AI (Artificial Intelligence) tasks such as image processing, tend to achieve high performance (e.g., high inference accuracy) with complex configurations. On the other hand, the complex configurations of NNs may increase the number of times of calculation in executing the NNs by calculators and the size of memory used in executing the NNs by the calculators.

As a method for reducing the number of times of calculation, in other words, shortening calculation durations (speeding up), and for reducing the size of memory, in other words, downsizing machine learning models of NNs, "pruning" has been known.

The pruning is a method for reducing the data size of the machine learning models and for reducing the calculation durations and communication durations by reducing (pruning) at least one type of elements among edges (weights), nodes, and channels of NNs.

Excessive pruning causes degradation of inference accuracy of NNs. Therefore, it is important to perform pruning of NNs while maintaining the inference accuracy or while keeping the degraded level of inference accuracy at a predetermined level.

For example, in pruning, a known method selects a layer that does not significantly affect the inference accuracy of NNs. This method, for example, determines a channel of a convolutional layer to be pruned based on parameters used in a Batch Normalization (BN) layer that follows a convolutional layer.

CITATION LIST

PATENT DOCUMENT

[Patent Document 1] U.S. Patent Publication No. 2019/0057308
[Patent Document 2] U.S. Patent Publication No. 2018/0232640
[Patent Document 3] Japanese Laid-open Patent Publication No. 2021-47854
[Patent Document 4] Japanese Laid-open Patent Publication No.2020-123269
[Patent Document 5] Japanese Laid-open Patent Publication No.2021-22050
[Patent Document 6] U.S. Patent Publication No.2019/0080238
[Patent Document 7] U.S. Patent Publication No.2019/0205759
[Patent Document 8] U.S. Patent Publication No.2020/0184333 Singh Pravendra ET AL, "Play and Prune: Adaptive Filter Pruning for Deep Model Compression", 11 May 2019 (2019-05-11), relates to a new-min-max framework for filter-level pruning of CNNs which consists of two modules: (1) An adaptive filter pruning (AFP) module, which minimizes the number of filters in the model; and (2) A pruning rate controller (PRC) module, which maximizes the accuracy during pruning. The framework, called Play and Prune (PP), jointly prunes and fine-tunes CNN model parameters, with an adaptive pruning rate, while maintaining the model's predictive performance. Moreover, the approach allows directly specifying the desired error tolerance instead of the pruning level.

Pavlo Molchanov ET AL, "PRUNING CONVOLUTIONAL NEURAL NETWORKS FOR RESOURCE EFFICIENT INFERENCE", 8 June 2017 (2017-06-08 ), provides a new formulation for pruning convolutional kernels in neural networks to enable efficient inference by interleaving greedy criteria-based pruning with fine-tuning by backpropagation, which shows that pruning can lead to more than 10x theoretical reduction in adapted 3D-convolutional filters with a small drop in accuracy in a recurrent gesture classifier.

SUMMARY OF INVENTION

PROBLEMS TO BE SOLVED BY INVENTION

The method for selecting the layer that does not significantly affect the inference accuracy of NNs is applied to the

convolutional layer to which the BN layer is connected, but is not assumed to be applied to other layers such as the convolutional layers to which no BN layer is connected or fully connected layers.

As one aspect, an object of the present disclosure is to realize downsizing of a neural network including multiple layers.

MEANS TO SOLVE THE PROBLEM

According to an aspect of the embodiments, a machine learning program causes a computer to execute a process including: calculating thresholds of errors in tensors between before and after reduction one for each element of a plurality of layers in a trained model of a neural network including the plurality of layers; selecting reduction ratio candidates to be applied one to each of the plurality of layers based on a plurality of the thresholds and errors in tensors between before and after reduction in cases where the elements are reduced by each of a plurality of reduction ratio candidates in each of the plurality of layers; and determining reduction ratios to be applied one to each of the plurality of layers based on inference accuracy of the trained model and inference accuracy of a reduced model after machine learning, the reduced model being obtained by reducing each element of the plurality of layers in the trained model according to the reduction ratio candidates to be applied.

EFFECT OF INVENTION

As one aspect, the present disclosure can realize downsizing of a neural network including multiple layers.

BRIEF DESCRIPTION OF DRAWINGS

FIG. 1 is a diagram for explaining an example of a process that determines a channel of a convolutional layer to be pruned.
FIG. 2 is a diagram illustrating an example of L1 regularization learning.
FIG. 3 is a diagram illustrating an example of whether the method of FIGS. 1 and 2 is applicable or inapplicable in layers of an NN.
FIG. 4 is a block diagram illustrating an example of a functional configuration of a server according to one embodiment.
FIG. 5 is a diagram illustrating an example of calculating a pruning rate that can guarantee accuracy.
FIG. 6 is a diagram illustrating an example of calculating accuracy of models before and after pruning.
FIG. 7 is a diagram illustrating an example of a search for the pruning rates.
FIG. 8 is a diagram explaining an example of a method for deriving a threshold.
FIG. 9 is a diagram illustrating an example of the threshold and an upper limit of the threshold.
FIG. 10 is a diagram explaining an example of a method for determining a channel to be pruned.
FIG. 11 is a diagram explaining an example of calculating a pruning error.
FIG. 12 is a diagram explaining an example of a method for determining a node to be pruned.
FIG. 13 is a diagram explaining an example of calculating a pruning error.
FIG. 14 is a diagram explaining an example of a method for determining a weight to be pruned.
FIG. 15 is a diagram explaining an example of calculating a pruning error.
FIG. 16 is a flowchart for explaining an operation example of processes by the server according to the one embodiment.
FIG. 17 is a diagram illustrating an example of a model including convolutional layers to which no BN layer is connected and fully connected layers.
FIG. 18 is a diagram illustrating volume compression rates of model data based on pruning rates determined by the method according to the one embodiment.
FIG. 19 is a diagram illustrating an example of data size of a model in relation to times of searches in the result illustrated in FIG. 18.
FIG. 20 is a diagram illustrating an example of the pruning rate (entire model) in relation to the times of searches in the result illustrated in FIG. 18.
FIG. 21 is a diagram illustrating an example of the pruning rate (for each layer) in relation to the times of searches in the result illustrated in FIG. 18.
FIG. 22 is a diagram illustrating an example of the number of channels or nodes for each layer illustrated in FIG. 17 and the pruning rate for each layer.
FIG. 23 is a diagram illustrating a relationship between the times of searches for the pruning rates and the model size.
FIG. 24 is a diagram illustrating an example of a result of pruning error comparison in response to update on a trust

radius in the method according to the one embodiment.
FIG. 25 is a block diagram illustrating an example of a functional configuration of a server according to a first modification.
FIG. 26 is a diagram explaining an example of a trust radius update process in a case of increasing the trust radius.
FIG. 27 is a diagram explaining an example of the trust radius update process in a case of decreasing the trust radius.
FIG. 28 is a flowchart for explaining an operation example of processes by the server according to the first modification.
FIG. 29 is a diagram illustrating a relationship between the times of searches for the pruning rates and the model size.
FIG. 30 is a diagram illustrating a relationship between the times of searches for the pruning rates and the model size according to settings of an initial value of the trust radius.
FIG. 31 is a block diagram illustrating an example of a functional configuration of a server according to a second modification.
FIG. 32 is a diagram explaining an example of a setting of the initial value of the trust radius.
FIG. 33 is a flowchart for explaining an operation example of processes by the server according to the second modification.
FIG. 34 is a diagram illustrating a relationship between the times of searches for the pruning rates and the model size according to the settings of the initial value of the trust radius.
FIG. 35 is a block diagram illustrating an example of a hardware (HW) configuration of a computer.

## DESCRIPTION OF EMBODIMENT(S)

Hereinafter, an embodiment of the present disclosure will now be described with reference to the drawings.

In the drawings used in the following description, the same reference numerals denote the same or similar parts unless otherwise specified.

### <1> One embodiment

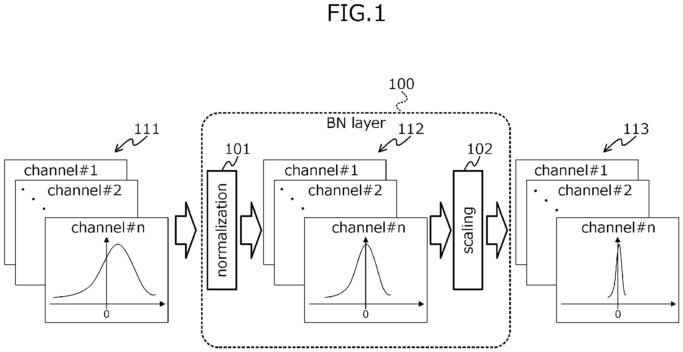

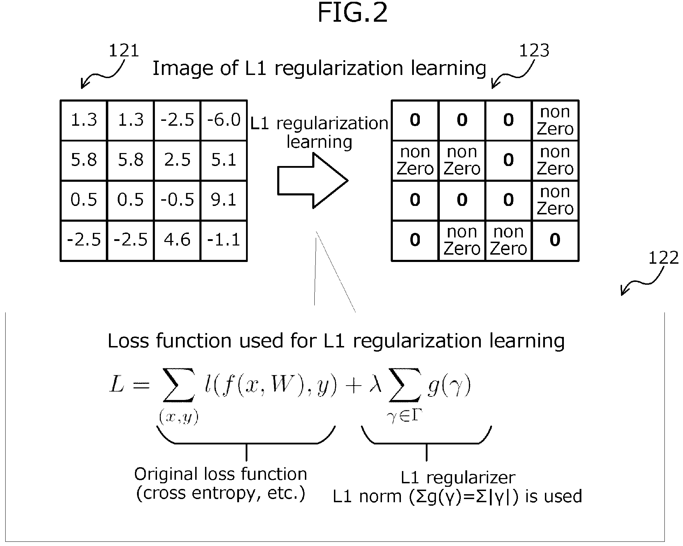

FIG. 1 is a diagram for explaining an example of a process that determines a channel of a convolutional layer to be pruned, and FIG. 2 is a diagram illustrating an example of L1 regularization learning. As a method for selecting a layer that does not significantly affect inference accuracy of an NN, FIG. 1 illustrates a method in which a calculator uses a scaling factor $\gamma$ used in a BN layer 100 that follows a convolutional layer to determine a channel of a convolutional layer to be pruned. The graphs illustrated in channels 111 to 113 in FIG. 1 represent distribution of output tensors.

As depicted in FIG. 1, the calculator executes a normalization 101 for each of multiple channels 111 (#1 to #n; n is an integer of 2 or more) inputted from a convolutional layer to the BN layer 100. For example, in the normalization 101, in accordance with the following equation (1), the calculator calculates a mean value $\mu$ and a variance $\sigma^2$ for each channel 111 to obtain multiple channels 112 (#1 to #n) that represent normalized distribution of mean "0" and variance "1". In the following equation (1), $z_{in}$ and $z_{mid}$ represent channels 111 and 112, respectively, and $\mu_B$ and $\sigma_B{}^2$ represent the mean value and the variance in the current mini-batch B, respectively.

[Equation 1]

$$z_{mid} = \frac{z_{in} - \mu_{\mathrm{B}}}{\sqrt{\sigma_{\mathrm{B}}^2 + \epsilon}} \qquad (1)$$

The calculator executes scaling 102 for the multiple channels 112 (#1 to #n). For example, in the scaling 102, in accordance with the following equation (2), the calculator multiplies each of the multiple channels 112 by the scaling factor $\gamma$, and adds a bias $\beta$ to the multiplication result to output multiple channels 113 (#1 to #n) that represent distribution scaled by the parameters y and $\beta$. In the following equation (2), $z_{out}$ represents the channels 113. The parameters $\gamma$ and $\beta$ may be optimized by machine learning.

[Equation 2]

$$z_{out} = \gamma z_{mid} + \beta \qquad (2)$$

At this step, the output is almost eliminated for the channel 113 (channel #n in the example of FIG. 1) resulted from the scaling 102 when $\gamma$ is small. This means that inference accuracy of the NN is not significantly affected even if the channel is deleted by pruning. Thus, the calculator determines the channel as a pruning target in units of channels by searching for a small (e.g., "0") y.

For example, the calculator searches for a small (diminishing) $\gamma$ by applying L1 regularization learning to $\gamma$. The L1

regularization learning is a machine learning technique known to be capable of making a parameter to be learned "sparse" by performing machine learning while adding a regularizer of L1 to a loss function calculated by the NN at the output.

As illustrated in FIG. 2, the calculator performs the L1 regularization learning using a loss function 122 on a vector 121 to obtain a vector 123 on which the L1 regularization has been performed. The loss function 122 may be, as expressed by the following equation (3), a function L obtained by adding an original loss function (first term) such as cross entropy and an L1 regularizer (second term) that uses an L1 norm ($\Sigma g(\gamma)=\Sigma|\gamma|$).

[Equation 3]

$$\mathrm{L} = \sum_{(x,y)} l(f(x, W), y) + \lambda \sum_{\gamma \in \Gamma} g(\gamma) \quad (3)$$

The L1 regularization learning causes each parameter of the vector 123 to indicate (dichotomize) whether each parameter of the vector 121 becomes zero or non-zero. By using such L1 regularization learning, the calculator can identify a channel (s) in which $\gamma$ becomes zero (close to zero) as the channel of the pruning target.

The identification of the pruning target using the L1 regularization learning depicted in FIGS. 1 and 2 is applied to the convolutional layer to which the BN layer is connected, but is not assumed to be applied to other layers such as the convolutional layers to which no BN layer is connected and the fully connected layers.

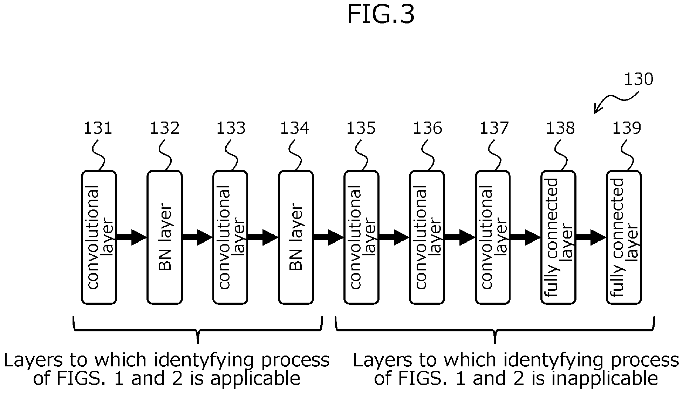

FIG. 3 is a diagram illustrating an example of whether the method of FIGS. 1 and 2 is applicable or inapplicable in layers 131 to 139 of an NN 130. As depicted in FIG. 3, convolutional layers 131 and 133 and BN layers 132 and 134 are layers to which the L1 regularization learning depicted in FIGS. 1 and 2 is applicable, and convolutional layers 135 to 137 and fully connected layers 138 and 139 are layers to which the L1 regularization learning depicted in FIGS. 1 and 2 is inapplicable.

In view of the above, one embodiment describes a method for realizing downsizing of an NN by determining a pruning rate for each layer regardless of the type of layers.

<1-1> Example of Functional Configuration of Server According to One Embodiment

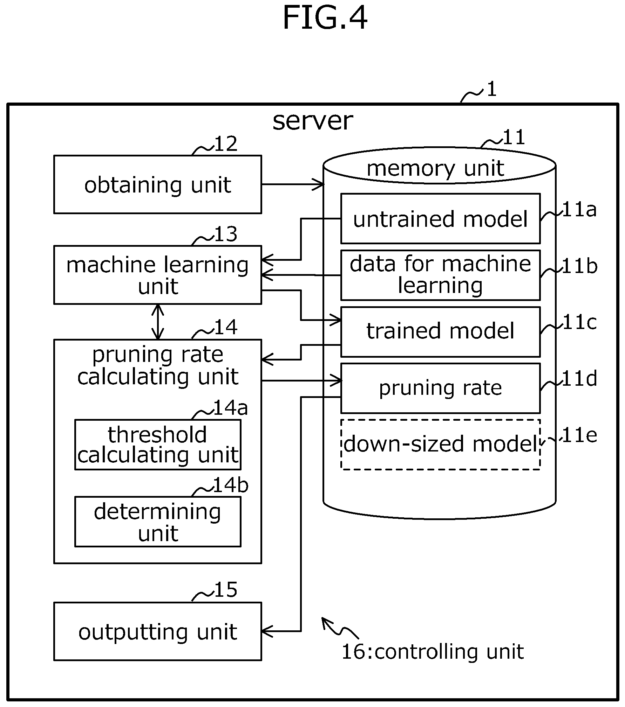

FIG. 4 is a block diagram illustrating an example of a functional configuration of a server 1 according to the one embodiment. The server 1 is an example of a calculator, a computer, or an information processing apparatus that outputs the pruning rate. As illustrated in FIG. 4, the server 1 may illustratively include a memory unit 11, an obtaining unit 12, a machine learning unit 13, a pruning rate calculation unit (hereinafter, simply referred to as a "calculation unit") 14, and an outputting unit 15. The obtaining unit 12, the machine learning unit 13, the calculating unit 14, and the outputting unit 15 are examples of a controlling unit 16.

The memory unit 11 is an example of a storage area, and stores various data to be used by the server 1. As illustrated in FIG. 4, the memory unit 11 may be illustratively capable of storing an untrained model 11a, data 11b for machine learning, a trained model 11c, pruning rates 11d, and a down-sized model 11e.

The obtaining unit 12 obtains the untrained model 11a and the data 11b for machine learning, and stores them in the memory unit 11. For example, the obtaining unit 12 may generate one of or both the untrained model 11a and the data 11b for machine learning in the server 1, or may receive them from a computer outside the server 1 via a non-illustrated network.

The untrained model 11a may be a model of the NN including the untrained parameters before machine learning. The NN may include various layers and may be, for example, a DNN (Deep NN) . The NN may include, for example, a convolutional layer to which no BN layer is connected or a fully connected layer, or may include a convolutional layer to which a BN layer is connected, and may be, as an example, the NN 130 illustrated in FIG. 3.

The data 11b for machine learning may be, for example, a data set for training to be used for machine learning (training) of the untrained model 11a. For example, when machine learning is performed on an NN for realizing image processing, the data 11b for machine learning may include, for example, multiple pairs of labeled training data that includes training data such as image data and a ground truth label for the training data.

In the machine learning phase, the machine learning unit 13 executes a machine learning process that performs machine learning on the untrained model 11a based on the data 11b for machine learning. For example, the machine learning unit 13 may generate the trained model 11c by the machine learning process of the untrained model 11a. The trained model 11c may be an NN model including a trained parameter(s).

The trained model 11c may be obtained by updating a parameter included in the untrained model 11a, and may be regarded as, for example, a model as a result of a change from the untrained model 11a to the trained model 11c through the machine learning process. The machine learning process may be implemented by various known techniques.

The calculating unit 14 calculates the pruning rates 11d by executing a pruning rate calculation process for the trained model 11c, and stores them into the memory unit 11.

For example, the calculating unit 14 may include a threshold calculating unit 14a that calculates a threshold for

selecting one of pruning rate candidates for each layer, and a determining unit 14b that determines, based on inference accuracy of the model pruned at the pruning rate candidates, the pruning rates 11d to be adopted.

The outputting unit 15 outputs output data based on the pruning rates 11d generated (obtained) by the calculating unit 14. The output data may include, for example, the pruning rates 11d themselves, the down-sized model 11e, or both.

The down-sized model 11e is data of a down-sized model of the trained model 11c, which is obtained by execution of pruning on the trained model 11c based on the pruning rates 11d. For example, in cooperation with the machine learning unit 13, the outputting unit 15 may acquire the down-sized model 11e by execution of pruning and re-learning on the trained model 11c while applying the pruning rates 11d, and may store the acquired model into the memory unit 11. The down-sized model 11e may be, for example, generated separately from the trained model 11c, or may be the updated data of the trained model 11c obtained through pruning and re-learning.

In outputting the output data, the outputting unit 15 may, for example, transmit (provide) the output data to another non-illustrated computer, or may store the output data into the memory unit 11 and manage the output data to be acquirable from the server 1 or another computer. Alternatively, in outputting the output data, the outputting unit 15 may display information indicating the output data on an output device such as the server 1, or may output the output data in various other manners.

<1-2> Example of Pruning Rate Calculation Process

Next, an example of the pruning rate calculation process by the calculating unit 14 of the server 1 will be described. In the following description, a calculation target of the pruning rate is assumed to be a weight matrix W which is an example of a parameter of a layer.

The calculating unit 14 determines the pruning rate regardless of the type of layers by using errors in tensors for each layer, which errors are generated by pruning. As an example, the calculating unit 14 may calculate the pruning rate according to the following procedures (i) to (iii).

(i) The calculating unit 14 (threshold calculating unit 14a) determines (calculates), for each layer, the pruning rate that can guarantee the accuracy.

The term "guarantee the accuracy" means, for example, to guarantee that accuracy of inference (inference accuracy) using the down-sized model 11e obtained by pruning the trained model 11c exceeds a predetermined criterion.

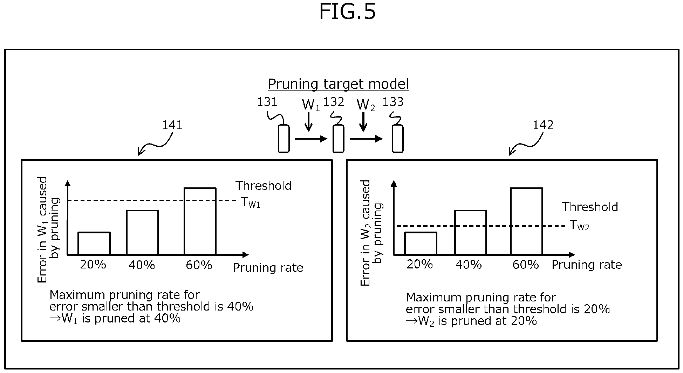

FIG. 5 is a diagram illustrating an example of calculating the pruning rate that can guarantee the accuracy. As illustrated in FIG. 5, in (i), the threshold calculating unit 14a determines, for each weight matrix W of the multiple layers, the pruning rate to be applied to the weight matrix W of each layer included in the trained model 11c of the pruning target. Although FIG. 5 focuses on the layers 131 to 133, the application of the description of FIG. 5 is not limited to these, and may be any of the layers 131 to 139 illustrated in FIG. 3.

Here, the pruning rate is an example of a ratio for reducing (reduction ratio) an element(s) of a layer and indicates a ratio for rendering the pruning target in the trained model 11c "sparse". In the example of FIG. 2, the pruning rate corresponds to the number of places set as "0" in the vector 123.

As illustrated in FIG. 5, the threshold calculating unit 14a selects, for each of the weight matrix $W_1$ of the layer 131 (weight matrix $W_1$ connected to the layer 132) and the weight matrix $W_2$ of the layer 132 (weight matrix $W_2$ connected to the layer 133), one pruning rate from multiple pruning rate candidates. The pruning rate candidates are examples of reduction ratio candidates, and may be, for example, two or more ratios between 0% and 100%, common to multiple layers, different in individual layers, or a combination thereof. In the example of FIG. 5, the pruning rate candidates are assumed to be 0%, 20%, 40%, and 60%.

For example, the threshold calculating unit 14a obtains an error in tensors between before and after pruning in cases where the pruning is performed for each pruning rate candidate, and determines the maximum pruning rate candidate among the pruning rate candidates with errors smaller than a threshold $T_W$. In the example of FIG. 5, for $W_1$, the threshold calculating unit 14a determines that the maximum pruning rate candidate with an error smaller than a threshold $T_{w1}$ is 40% (see arrow 141). In addition, for $W_2$, the threshold calculating unit 14a determines that the maximum pruning rate candidate with an error smaller than a threshold $T_{w2}$ is 20% (see arrow 142) .

The threshold $T_w$ is a threshold of the error in the tensors between before and after the pruning, and is an upper limit of the pruning rate that can guarantee the accuracy. For example, the threshold calculating unit 14a may calculate the threshold $T_w$ for each layer by expressing the loss function at the time of pruning the pruning target by an approximate expression such as a first-order Taylor expansion. The details of the method for calculating the threshold $T_w$ will be described later.

The pruning rate calculated in (i) may be regarded as a "provisionally calculated" pruning rate in relation to processes of (ii) and (iii).

As described above, the threshold calculating unit 14a calculates the thresholds T of the errors in the tensors

between before and after the reduction one for each element of the multiple layers in the trained model 11c of the NN including the multiple layers. The threshold calculating unit 14a selects the reduction ratio candidates to be applied one to each of the multiple layers based on the multiple thresholds T and the errors in the tensors between before and after the reduction in the cases where the elements are reduced by each of the multiple reduction ratio candidates in each of the multiple layers.

(ii) The calculating unit 14 (determining unit 14b) determines the pruning rate based on the accuracy of the machine learning model pruned (downsized) by using the pruning rate determined in (i) and the accuracy of the machine learning model that has not undergone pruning.

The determining unit 14b considers the error caused by the approximate expression (first-order Taylor expansion), and compares the sum of accuracy $Acc_p$ of the model pruned at the pruning rate determined in (i) for each layer and an accuracy margin $Acc_m$ with accuracy $Acc_{wo}$ of an unpruned model. The accuracy margin $Acc_m$ is a margin for which the inference accuracy is allowed to be degraded, and may be set by a designer. The margin may be "0", and in this case, the determining unit 14b may compare the accuracy $Acc_p$ with the accuracy $Acc_{wo}$ of the unpruned model.

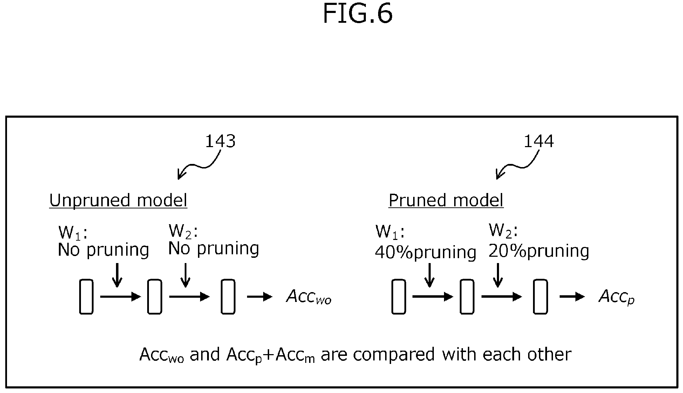

FIG. 6 is a diagram illustrating an example of calculating the accuracy of the model before and after the pruning. For example, the determining unit 14b calculates the accuracy $Acc_{wo}$ of the unpruned model (trained model 11c) for all layers ($W_1$, $W_2$, ...) (see arrow 143). The unpruned model may be regarded as a model that has been pruned at a pruning rate of 0% for each layer. The determining unit 14b calculates the accuracy $Acc_p$ of the model that has been pruned at the pruning rate ($W_1$=40%, $W_2$=20%,...) calculated by (i) for each layer (see arrow 144).

If the sum $Acc_p+Acc_m$ of the accuracy is equal to or higher than the accuracy $Acc_{wo}$, the determining unit 14b determines to adopt the pruning rates determined in (i). For example, the determining unit 14b stores the pruning rates determined in (i) as the pruning rates 11d into the memory unit 11.

On the other hand, if the sum $Acc_p+Acc_m$ of the accuracy is lower than the accuracy $Acc_{wo}$, the determining unit 14b determines to discard the pruning rates determined in (i). For example, the determining unit 14b discards the pruning rates determined in (i) and determines to adopt the pruning rates 11d determined in the latest (ii) (or initial pruning rates 11d).

(iii) The calculating unit 14 (determining unit 14b) repeatedly applies (i) and (ii) multiple times to search for maximum pruning rates that can guarantee the accuracy.

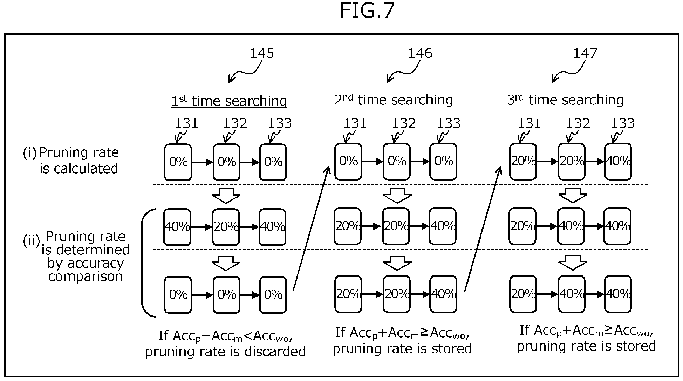

FIG. 7 is a diagram illustrating an example of a search for the pruning rates. The example of FIG. 7 illustrates a case where the calculating unit 14 uses the pruning rates for three layers (131 to 133) three times.

As illustrated in FIG. 7, in the first time searching (see reference numeral 145), in (i), the threshold calculating unit 14a is assumed to calculate the threshold $T_w$ and to determine that, based on the threshold $T_w$, the pruning rates for the layers 131 to 133 are to be "40%, 20%, 40%" from "0%, 0%, 0%" (initial values) . For example, in (ii), if the determining unit 14b determines $Acc_p+Acc_m<Acc_{wo}$ in comparing the inference accuracy, the determining unit 14b discards the pruning rates determined in (i) and adopts "0%, 0%, 0%" which are the values before the determination.

In the second time searching (see reference numeral 146), in (i), the threshold calculating unit 14a is assumed to calculate (update) the threshold $T_w$ and to determine that, based on the updated threshold $T_w$, the pruning rates for the layers 131 to 133 are to be "20%, 20%, 40%" from "0%, 0%, 0%". For example, in (ii), if the determining unit 14b determines $Acc_p+Acc_m \geq Acc_{wo}$ in comparing the inference accuracy, the determining unit 14b adopts "20%, 20%, 40%" and stores them as the pruning rates 11d into the memory unit 11.

In the third time searching (see reference numeral 147), in (i), the threshold calculating unit 14a is assumed to calculate (update) the threshold $T_w$ and to determine that, based on the updated threshold $T_w$, the pruning rates for the layers 131 to 133 are to be "20%, 40%, 40%" from "20%, 20%, 40%". For example, in (ii), if the determining unit 14b determines $Acc_p+Acc_m \geq Acc_{wo}$ in comparing the inference accuracy, the determining unit 14b adopts "20%, 40%, 40%" and stores (updates) them as the pruning rates 11d into the memory unit 11.

In a non-claimed embodiment, the determining unit 14b may search for the pruning rates over a predetermined number of times, for example, a preset number of times.

As described above, the determining unit 14b determines the reduction ratios to be applied one to each of the multiple layers based on the inference accuracy of the trained model 11c and the inference accuracy of the reduced model after the machine learning, which is obtained by reducing each element of the multiple layers in the trained model 11c according to the reduction ratio candidates to be applied.

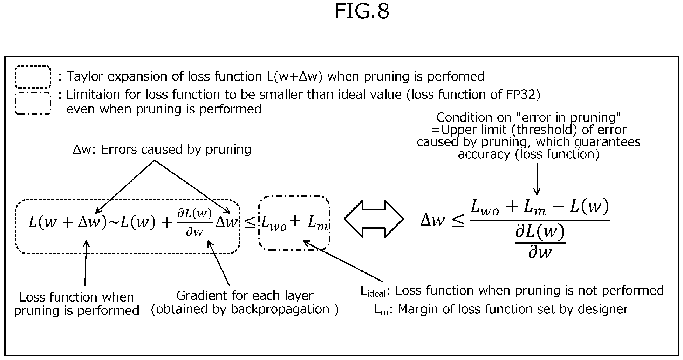

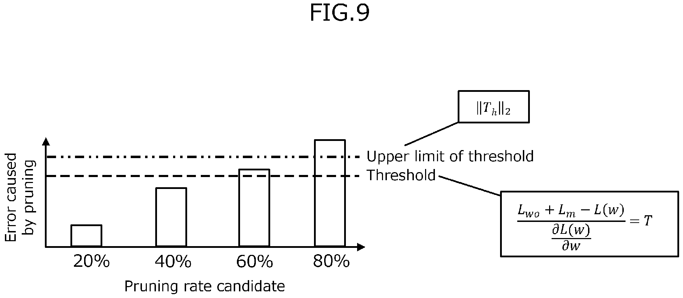

Next, description will be made in relation to a specific example of the pruning rate calculation process described above. FIG. 8 is a diagram explaining an example of a method for deriving a threshold, and FIG. 9 is a diagram illustrating an example of the threshold and the upper limit of the threshold.

The threshold calculating unit 14a performs first-order Taylor expansion on the loss function in the pruning to calculate the threshold of the pruning rate that can guarantee the accuracy for each layer. For example, assuming that: the error in the tensors for each layer, which error is generated by pruning, is $\Delta w$; the loss function in the pruning is $L(w+\Delta w)$ ; the loss function of the model of the pruning target is $L(w)$; and the loss function ($L_{ideal}$) without the pruning is $L_{wo}+L_m$, the threshold of the pruning rate that can guarantee the accuracy is calculated by the following equation (4). It should be noted

that $L_{wo}$ is the loss function of the unpruned model, and $L_m$ is a margin of the loss function set by a designer.
[Equation 4]

$$L(w+\Delta w) \sim L(w) + \frac{\partial L(w)}{\partial w}\Delta w \leq L_{wo} + L_m \qquad (4)$$

The left side of the above equation (4) (see the dashed line box in FIG. 8) is the Taylor expansion of the loss function L (w+Δw) in the pruning, and includes a weight gradient "∂L(W) /∂w" of each layer of the pruning target. The gradient of each layer may be calculated by backpropagation. The right side of the above equation (4) (see the dash-dot line box in FIG. 8) is a limitation for the loss function to be smaller than an ideal value (for example, the loss function of FP32) even when pruning is performed.

As described above, the threshold calculating unit 14a calculates the thresholds T based on the values of the loss functions of the trained model 11c at the time of reducing elements of each of the multiple layers and the weight gradients of each of the multiple layers.

Rearranging the above equation (4) can derive, as expressed by the following equation (5), a condition of the "error in pruning", which satisfies the limitation for the loss function in the pruning to be smaller than the ideal loss function. In other words, it is possible to derive the upper limit (threshold) of the error caused by the pruning, which guarantees the accuracy (loss function). The threshold calculating unit 14a sets the right side of the following equation (5) to be the threshold T.
[Equation 5]

$$\Delta w \leq \frac{L_{wo} + L_m - L(w)}{\frac{\partial L(w)}{\partial w}} \qquad (5)$$

As illustrated in FIG. 9, the threshold calculating unit 14a compares the threshold T set for each layer with the error in the L1 norm caused by the pruning. Then, the threshold calculating unit 14a determines to adopt the pruning rate candidate of the maximum value (40% in the example of FIG. 9) among the pruning rate candidates with errors smaller than the threshold T as the pruning rate resulted by (i).

As an example, in accordance with the following equation (6), the threshold calculating unit 14a may determine, for each layer of the pruning target, the pruning rate that causes a pruning error (left side) to be equal to or smaller than the threshold (right side). In the following equation (6), "$\|\Delta W\|_1$" is the L1 norm of the weight to be regarded as the pruning target and "n" is the number of elements of the weight of the layer in the pruning target.
[Equation 6]

$$\frac{\|\Delta W\|_1}{n} \leq \frac{L_{wo} + L_m - L(W)}{n} \sum_{i=1}^{n} \frac{1}{\left|\frac{\partial L(W)}{\partial w_i}\right|} \qquad (6)$$

As illustrated in the above equation (6), the threshold T is to be a parameter derived by approximation. To prevent mistakes in determining the pruning rate due to an approximation error, an upper limit is set for the threshold T (see FIG. 9). The threshold calculating unit 14a limits, based on a trust-region method, the magnitude of the threshold T by a "trust radius". The trust radius is an example of a threshold upper limit. The threshold calculating unit 14a scales the thresholds T such that an L2 norm of the thresholds T of all layers become equal to or smaller than the trust radius. In the example of FIG. 9, $T_h$ represents a vector according to the threshold T of each layer and "$\|T_h\|_2$" represents the L2 norm of the thresholds T of all layers.

For example, in accordance with the comparison result of the accuracy in the process of (ii) by the determining unit 14b, the threshold calculating unit 14a may update, in addition to the pruning rates, the trust radius (e.g., by multiplying it by a constant factor or the like).

As an example, if the sum $Acc_p$+$Acc_m$ of the accuracy is equal to or higher than the accuracy $Acc_{wo}$, the threshold calculating unit 14a may multiply the trust radius by a constant K ("K>1.0"), and if the sum $Acc_p$+$Acc_m$ of the accuracy is lower than the accuracy $Acc_{wo}$, the threshold calculating unit 14a may multiply the trust radius by a constant k ("0<k<1.0").

<1-3> Explanation According to Type of Pruning Target

Next, description will be made in relation to examples of a method for pruning and a method for calculating the pruning error according to the type of the pruning target. The type of the pruning target may be, for example, channel pruning, node pruning, weight pruning, etc. According to the type of the pruning target, the calculating unit 14 may

determine the pruning target and the pruning error by using the weight corresponding to the pruning target.

<1-3-1> Example of Channel Pruning

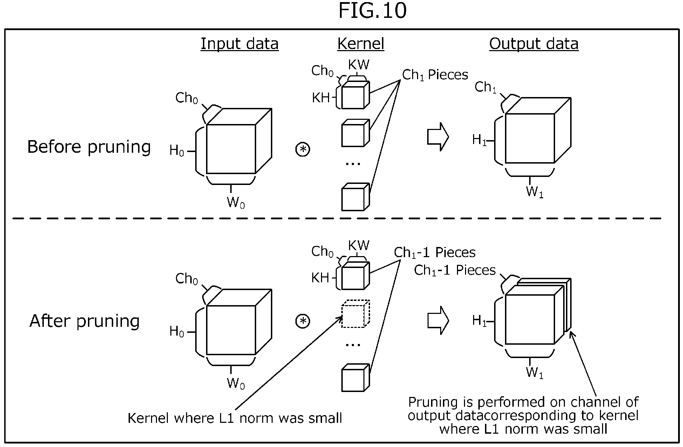

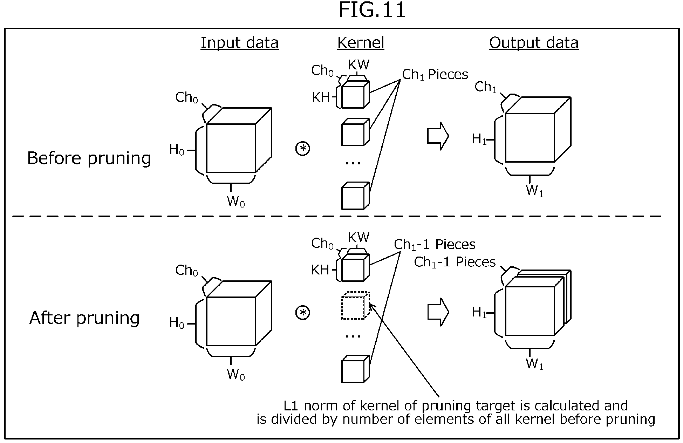

FIG. 10 is a diagram explaining an example of a method for determining a channel to be pruned and FIG. 11 is a diagram explaining an example of calculating the pruning error.

FIGS. 10 and 11 illustrate process flows of a convolution operation. Subscripted H and W indicate the size of input data, kernels, and output data, and subscripted Ch indicates the number of channels of the input data, the kernels, and the output data. Hereinafter, the same applies to the description of other type of pruning target.

(Example of Method for Determining Channel to be Pruned)

When the type of the pruning target is the channel, the calculating unit 14 calculates the L1 norm in units of kernels corresponding to the channels of the output data. For example, the calculating unit 14 calculates, as illustrated by "before pruning" in FIG. 10, the respective L1 norms for all of $Ch_1$ kernels before the pruning. As a result, $Ch_1$ L1 norms are calculated.

Next, as illustrated by "after pruning" in FIG. 10, the calculating unit 14 prunes the channel of the corresponding output data according to the set pruning rate in ascending order of the calculated L1 norms.

(Example of Calculating Pruning Error)

As illustrated in FIG. 11, the calculating unit 14 calculates the L1 norm of the kernel of the pruning target. The L1 norm of the kernel of the pruning target is the value obtained by subtracting the L1 norms of all kernels after pruning from the L1 norms of all kernels before pruning, that is, the difference in the L1 norms between before and after the pruning.

The calculating unit 14 may obtain the pruning error by dividing the calculated L1 norm by the number of elements of all kernels before the pruning.

<1-3-2> Example of Node Pruning

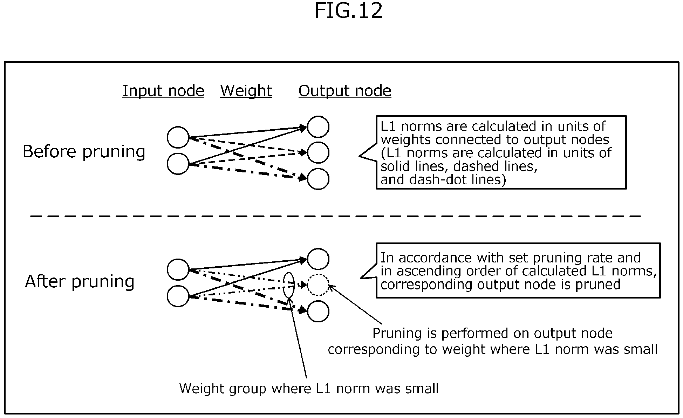

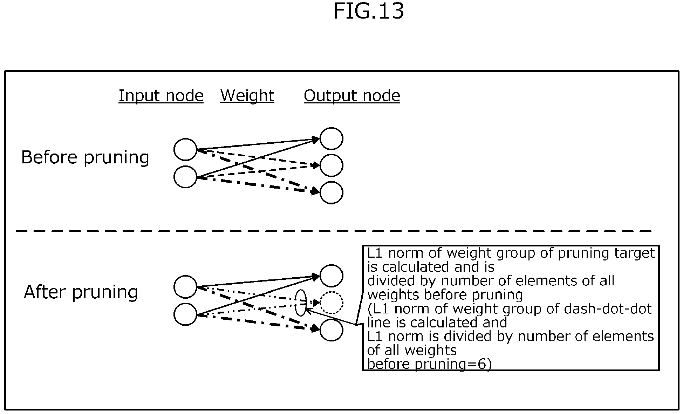

FIG. 12 is a diagram explaining an example of a method for determining the node to be pruned and FIG. 13 is a diagram explaining an example of calculating the pruning error.

(Example of Method for Determining Node to be Pruned)

When the type of the pruning target is the node, the calculating unit 14 calculates the L1 norm in units of weights connected to the output node. In the example of "before pruning" in FIG. 12, the calculating unit 14 calculates the L1 norm in each unit of solid lines, dashed lines, and dash-dot lines.

Next, as illustrated by "after pruning" in FIG. 12, the calculating unit 14 prunes the corresponding output node according to the set pruning rate in ascending order of the calculated L1 norms. For example, the calculating unit 14 determines that the output node corresponding to a weight group where the L1 norm was small is the node of the pruning target.

(Example of Calculating Pruning Error)

As illustrated in FIG. 13, the calculating unit 14 calculates the L1 norm of the weight group of the pruning target. The L1 norm of the weight group of the pruning target is obtained by subtracting the L1 norms of all weights after the pruning from the L1 norms of all weights before the pruning.

The calculating unit 14 may acquire the pruning error by dividing the calculated L1 norm by the number of elements of all weights before the pruning. In the example of "after pruning" in FIG. 13, the calculating unit 14 calculates the L1 norm of the weight group indicated by the dash-dot-dot line and divides the L1 norm by the number of elements (="6"; the number of lines) of all weights before the pruning.

<1-3-3> Example of Weight Pruning

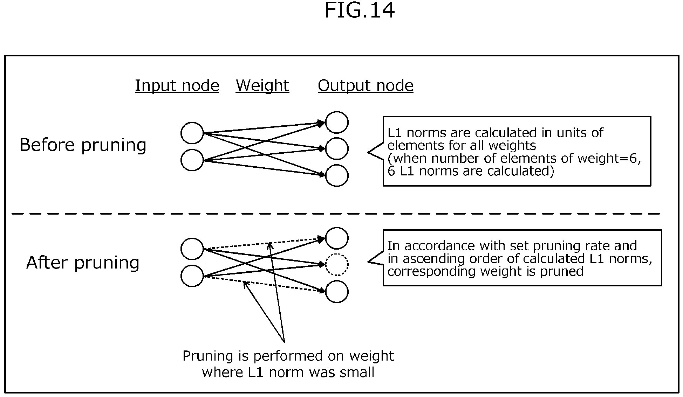

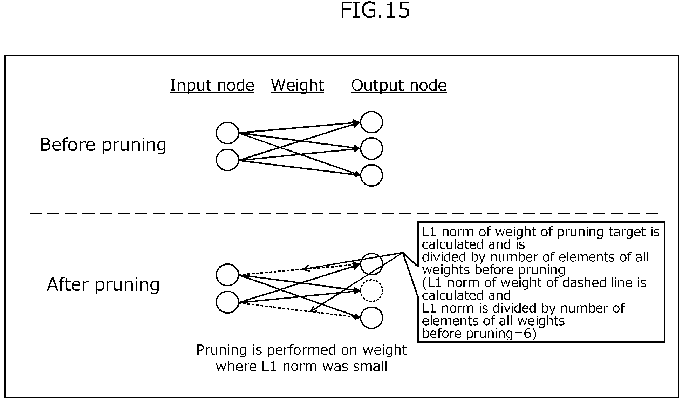

FIG. 14 is a diagram illustrating an example of a method for determining a weight to be pruned and FIG. 15 is a diagram illustrating an example of calculating the pruning error.

(Example of Method for Determining Weight to be Pruned)

When the type of the pruning target is the weight, the calculating unit 14 calculates the L1 norms for all of the weights in units of elements. In the example of "before pruning" in FIG. 14, since the number of elements of the weight is "6", the calculating unit 14 calculates "6" L1 norms.

Next, as illustrated by "after pruning" in FIG. 14, the calculating unit 14 prunes the corresponding weight according to the set pruning rate in ascending order of the calculated L1 norms. For example, the calculating unit 14 determines that the weight where L1 norm was small is the weight to be pruned.

(Example of Calculating Pruning Error)

As illustrated in FIG. 15, the calculating unit 14 calculates the L1 norm of the weight of the pruning target. The L1 norm of the weight of the pruning target is obtained by subtracting the L1 norms of all weights after the pruning from the L1 norms of all weights before the pruning.

The calculating unit 14 may acquire the pruning error by dividing the calculated L1 norm by the number of elements of all weights before the pruning. In the example of "after pruning" in FIG. 15, the calculating unit 14 calculates the L1 norm of the weight indicated by the dashed line and divides the L1 norm by the number of elements (="6"; the number of lines) of all weights before the pruning.

<1-4> Operation Example

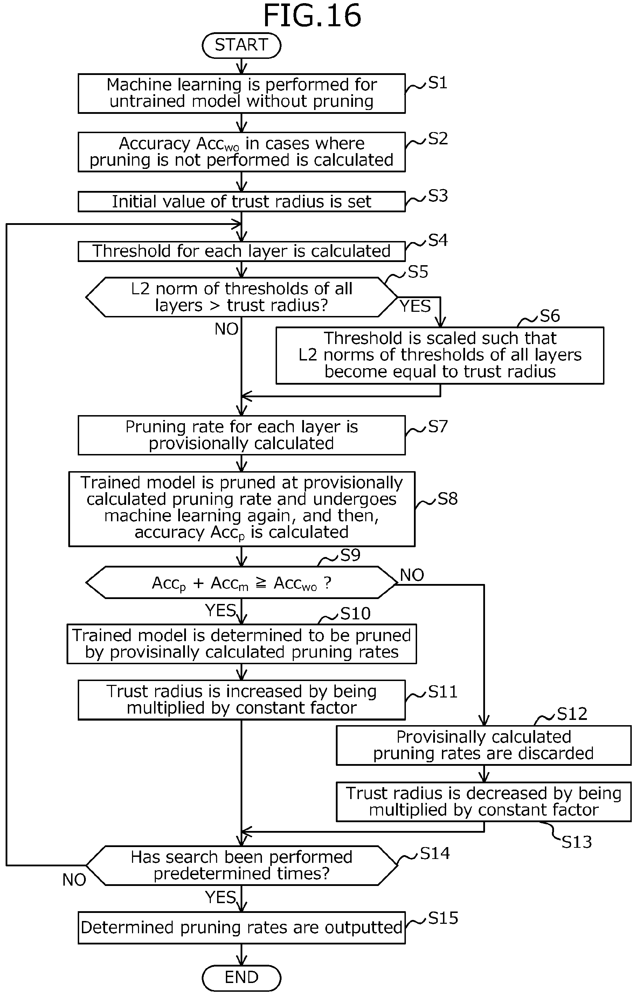

Next, with reference to FIG. 16, an operation example of the server 1 according to the one embodiment will be described. FIG. 16 is a flowchart for explaining an operation example of processes by the server 1 according to the one embodiment.

As illustrated in FIG. 16, in Step S1, the machine learning unit 13 executes the machine learning on the untrained model 11a obtained by the obtaining unit 12 without pruning.

The calculating unit 14 calculates the inference accuracy (recognition rate) $Acc_{wo}$ in cases where the pruning is not performed (Step S2).

The threshold calculating unit 14a sets the initial value of the trust radius (Step S3).

The threshold calculating unit 14a calculates the threshold T for each layer and the pruning error for each layer to be for setting the pruning rates (Step S4), and determines whether or not the L2 norm of the thresholds T of all layers are larger than the trust radius (Step S5). If the L2 norm of the thresholds T of all layers are equal to or smaller than the trust radius (NO in Step S5), the process proceeds to Step S7.

If the L2 norm of the thresholds T of all layers are larger than the trust radius (YES in Step S5), the threshold calculating unit 14a scales (updates) the thresholds such that the L2 norm of the thresholds T of all layers become equal to the trust radius (Step S6), and the process proceeds to Step S7.

In Step S7, the threshold calculating unit 14a provisionally calculates the pruning rate for each layer. For example, the threshold calculating unit 14a provisionally sets the pruning rate for each layer among the set pruning rate candidates. Steps S4 to S7 are examples of the process of (i) described above.

The machine learning unit 13 prunes the trained model 11c at the pruning rates provisionally calculated by the threshold calculating unit 14a, and executes machine learning again on the model after the pruning. The calculating unit 14 calculates the inference accuracy $Acc_p$ of the model after the re-executed machine learning (Step S8).

The determining unit 14b determines whether or not the inference accuracy $Acc_p$ + margin $Acc_m$ is equal to or higher than the inference accuracy $Acc_{wo}$ (Step S9). The evaluation of the inference accuracy (recognition rate) can compensate the mistakes in selecting the pruning rates due to the approximation error.

If the inference accuracy $Acc_p$ + the margin $Acc_m$ is equal to or higher than the inference accuracy $Acc_{wo}$ (YES in Step S9), the determining unit 14b determines to prune the trained model 11c at the provisionally calculated pruning rates (Step S10), and stores, as the pruning rates 11d, the provisionally calculated pruning rates into the memory unit 11. Further, the threshold calculating unit 14a increases the trust radius by multiplying the trust radius by a constant factor (Step S11), and the process proceeds to Step S14.

On the other hand, if the inference accuracy $Acc_p$ + margin $Acc_m$ is lower than the inference accuracy $Acc_{wo}$ (NO in Step S9), the determining unit 14b discards the provisionally calculated pruning rates (Step S12). The threshold calculating unit 14a decreases the trust radius by multiplying the trust radius by a constant factor (Step S13), and the process proceeds to Step S14. Steps S8 to S13 are examples of the process of (ii) described above.

In a non-claimed embodiment, in Step S14, the determining unit 14b determines whether or not the search (processes of Steps S4 to S13) has been performed predetermined times, in other words, whether or not the predetermined condition is satisfied regarding the execution times of the processes including the threshold calculation, the pruning rate candidate selection, and the pruning rate determination. If the search has not been performed the

predetermined times (NO in Step S14), the process moves to Step S4.

If the search has been performed the predetermined times (YES in Step S14), the outputting unit 15 outputs the determined pruning rates 11d (Step S15), and the process ends. Step S14 is an example of the process of (iii) described above.

As described above, by the threshold calculating unit 14a, the server 1 according to the one embodiment calculates the errors in the tensors used for the NN, which errors are generated by the pruning, and generates the thresholds from the values of the loss functions and the gradients obtained by the backpropagation of the NN. Further, the threshold calculating unit 14a compares the calculated errors in the pruning with the thresholds to provisionally calculate the pruning rates. Furthermore, the determining unit 14b compares the inference accuracy of the model after re-learning at the calculated pruning rates with the inference accuracy of the unpruned model, and determines the pruning rate for each layer. At this time, if the inference accuracy of the case with the pruning is determined to be deteriorated as compared to the inference accuracy of the case without the pruning, the threshold calculate unit 14a resets the upper limit of the threshold such that the thresholds is decreased, and searches for the pruning rates again.

Thus, the server 1 according to the one embodiment can determine the pruning rate for each layer regardless of the type of the layers. For example, the server 1 can determine the pruning rates to be applied to the trained model 11c that includes a convolutional layer to which no BN layer is connected, a fully connected layer, and the like.

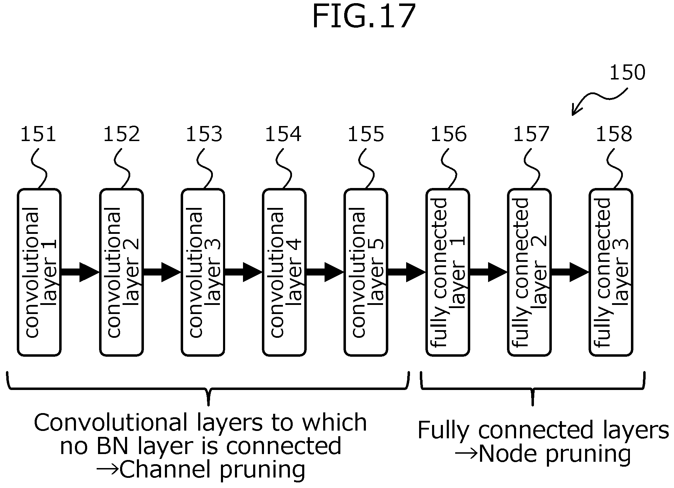

FIG. 17 is a diagram illustrating an example of a model 150 including convolutional layers to which no BN layer is connected and fully connected layers. The method according to the one embodiment may adopt different type of pruning target for each layer. The example of FIG. 17 illustrates a case where the pruning target of convolutional layers 151 to 155 to which no BN layer is connected is the channel pruning and the pruning target of fully connected layers 156 to 158 is the node pruning. Because pruning the output node of the final layer (layer 158) disables classification, the final layer is not subjected to the pruning.

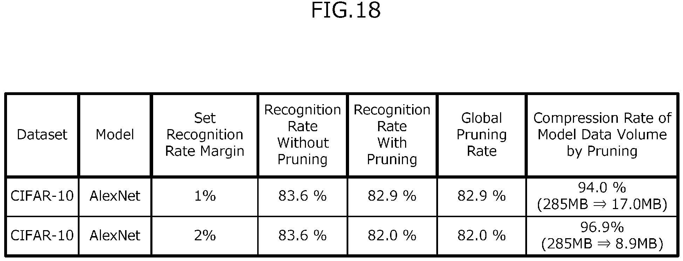

FIG. 18 is a diagram illustrating volume compression rates of model data based on the pruning rates determined by the method according to the one embodiment. FIG. 18 illustratively depicts a case where "CIFAR-10" is used as a data set of the data 11b for machine learning and "AlexNet" with the configuration illustrated in FIG. 17 is used as the untrained model 11a and the trained model 11c.

The example of FIG. 18 illustrates a case where the mini-batch size is "64" and "Optimizer hyperparameters" at the time of the re-executed machine learning are: a learning rate "0.001"; Weight decay "1e-4"; momentum "0.9"; pruning rate candidates for each search "20%, 10%, 0%"; margins $Acc_m$ of the recognition rate "1%, 2%"; and the number of times of searches "20".

As illustrated in FIG. 18, the method according to one embodiment can secure the model data volume compression rate of "94%" or higher while keeping the difference between the recognition rate $Acc_{wo}$ of the case without the pruning and the recognition rate $Acc_p$ of the case with the pruning within the margins $Acc_m$ "1%, 2%" or lower.

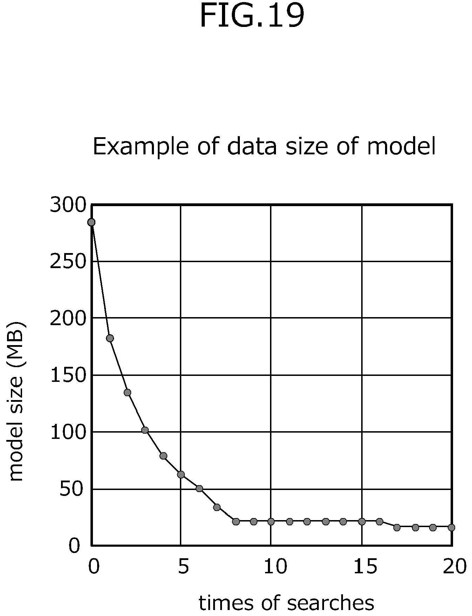

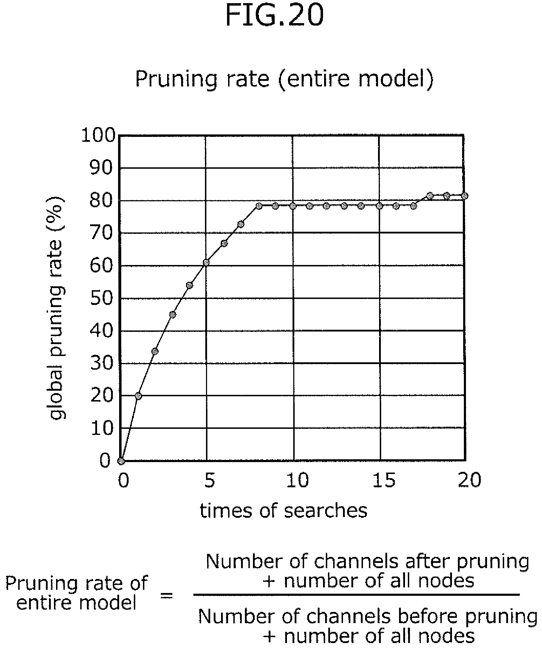

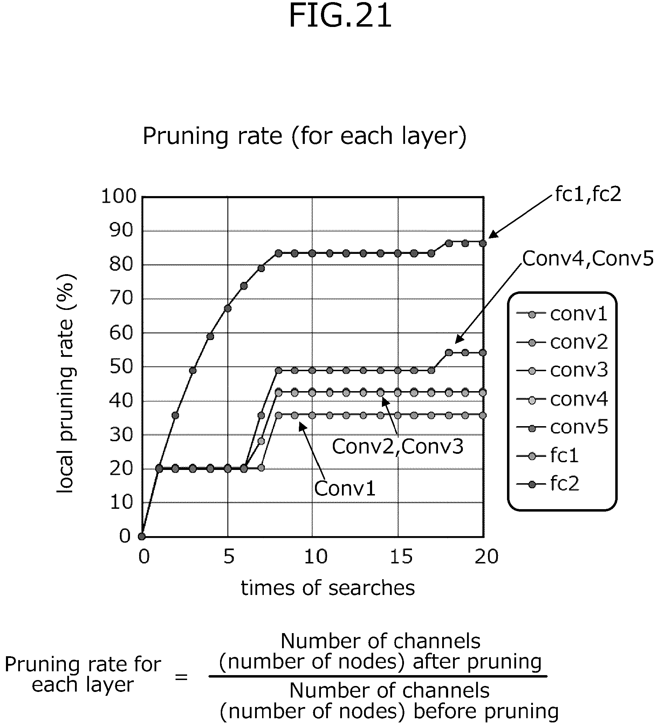

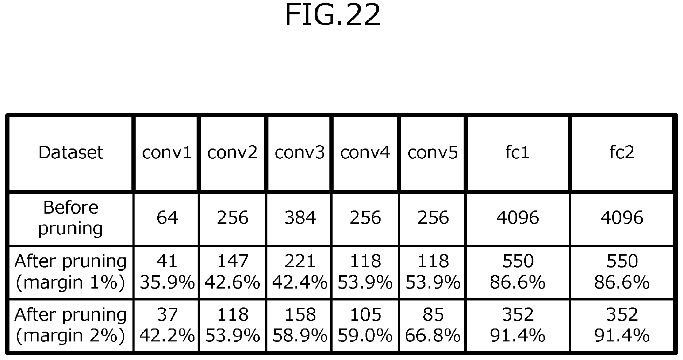

FIGS. 19 to 21 are diagrams respectively illustrating examples of the data size, the pruning rate (entire model), and the pruning rate (for each layer) of the model 150, in relation to the number of times of searches according to the result illustrated in FIG. 18 (where the margin $Acc_m$ is "1%"). FIG. 22 is a diagram illustrating an example of the number of channels or nodes (upper row) and the pruning rate for each layer (lower row) among the layers 151 to 157 (convolutional layers 1 to 5, fully connected layers 1 to 2) illustrated in FIG. 17.

As illustrated in FIGS. 19 to 22, from the relationship between the times of searches and the data size or the pruning rates, it can be inferred that, as the searches progress, the pruning rate increases and the data size is compressed. For example, as illustrated in FIG. 22, the pruning rate is higher in the layer closer to the output layer (the layer 158 side) than in the layer closer to the input layer (the layer 151 side). Therefore, in the case of the model 150 illustrated in FIG. 17, since the layer closer to the input layer has a greater influence on the accuracy as compared to the layer closer to the output layer, by determining the pruning rate for each layer, it is possible to enhance the effect on compressing the model data volume.

As described above, by the method according to the one embodiment, since the pruning rate can be determined and outputted for each layer, it is possible to realize the downsizing of the NN including various multiple layers.

<1-5> Modifications

Next, modifications according to the one embodiment will be described. The following description assumes, for simplicity, that the margin $Acc_m$ of the inference accuracy is "0", in other words, in comparing the inference accuracy, it is determined whether or not the inference accuracy $Acc_p$ is equal to or higher than the inference accuracy $Acc_{wo}$.

<1-5-1> First Modification

In the method according to the one embodiment, the number of times of searches for the pruning rates (the number of attempts of the process (iii)) is a hyperparameter manually set by, for example, a designer. As a result, for

example, if the number of times of searches is set to be small, the trained model 11c may be insufficiently downsized, and if the number of times of searches is set to be large, the trained model 11c may be sufficiently downsized, but search durations may become longer.

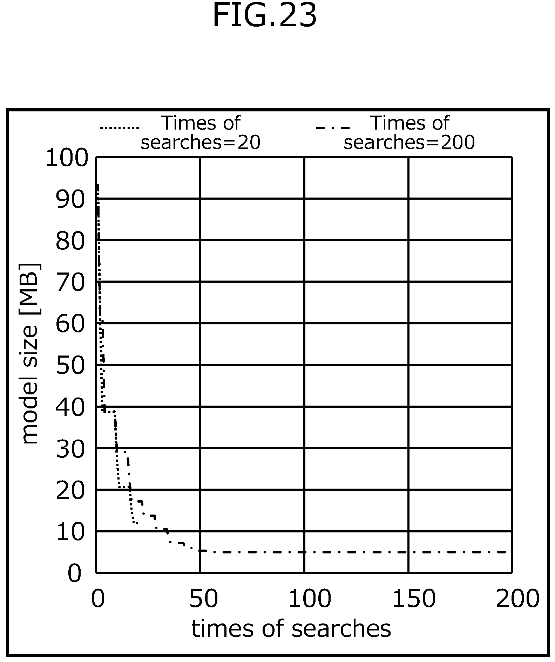

FIG. 23 is a diagram illustrating the relationship between the times of searches for the pruning rates and the model size. As illustrated in FIG. 23, in the case where the number of times of searches is "200", the model size is saturated at "5MB" at the "50"th search, indicating that the "51 to 200"th searches are unnecessary. On the other hand, at the "20"th search, the model size remains at around "11MB", indicating that there is room for further downsizing.

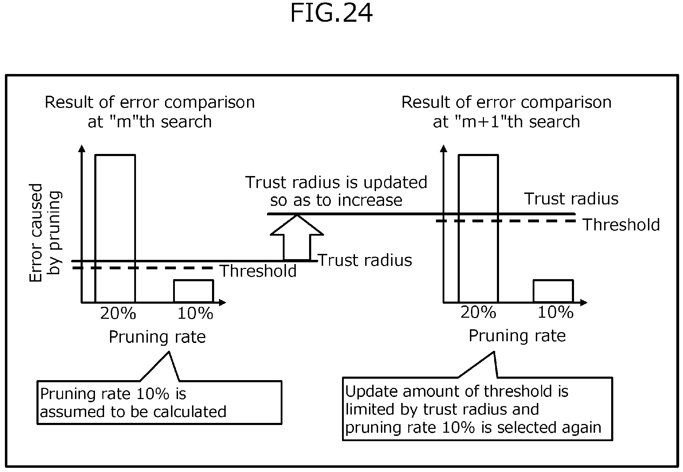

FIG. 24 is a diagram illustrating an example of a result of the pruning error comparison in response to the update on the trust radius in the method according to the one embodiment.

As illustrated in FIG. 24, in the result of the error comparison at the "m"th (m is an integer equal to or greater than "1") search, the pruning rate of "10%" is assumed to be calculated (determined). In this case, the trust radius is updated so as to be increased by being multiplied by the constant K. However, if the trust radius after the update is smaller than the error according to the pruning rate candidate one size larger than the pruning rate candidate determined at the "m"th time, even in the result of the error comparison at the "m+1"th search, the pruning rate of "10%" is to be calculated again.

As such, when the trust radius is multiplied by the constant K or the constant k, the update amount of the threshold is limited by the trust radius, so that the same pruning rate candidates may be adopted in multiple searches. Such a state where combinations of the same pruning rates are searched for multiple times leads to an increase in the times of searches for the pruning rates while the pruning of the model is suppressed from being sufficiently attempted.

In view of this, a first modification describes, by focusing on the update on the trust radius, a method for shortening (decreasing) the search durations (the times of searches) for the pruning rates appropriate to downsize the NN.

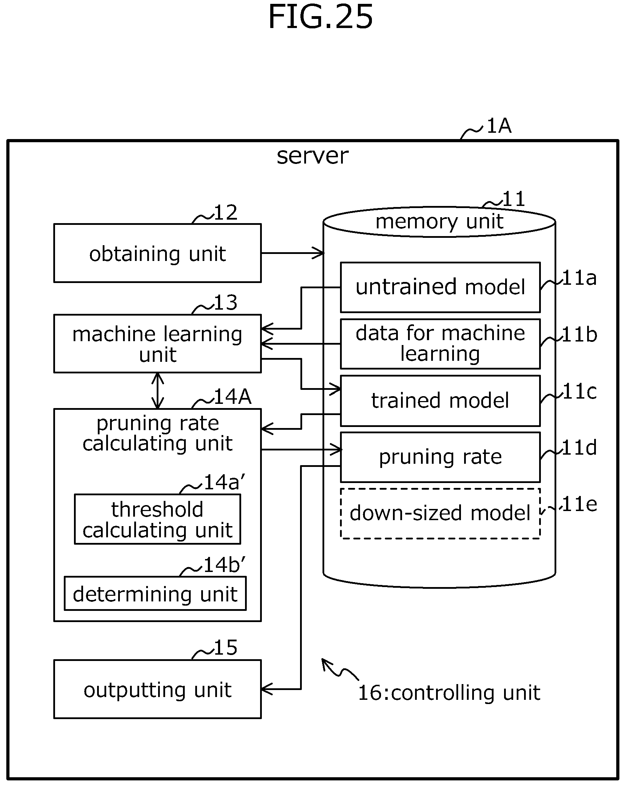

FIG. 25 is a block diagram illustrating an example of a functional configuration of a server 1A according to the first modification. As illustrated in FIG. 25, the server 1A may include a calculating unit 14A that differs from the server 1 of FIG. 4. The calculating unit 14A may include a threshold calculating unit 14a' and a determining unit 14b' which differ from the calculating unit 14 of FIG. 4.

The calculating unit 14A searches for combinations of different pruning rates in each search. The state where the selected combination has the pruning rate of "0%" for all of the layers represents that the calculating unit 14A is assumed to determine not to search the pruning rates any more. Under such a premise, the calculating unit 14A (determining unit 14b') terminates the searching when the combination in which the pruning rate is "0%" for all of the layers is selected.

In accordance with the comparison result of the inference accuracy by the determining unit 14b', the threshold calculating unit 14a' measures, for each layer i (i is an integer equal to or greater than 1), an absolute value "$E_{diff,i}$" of a different amount between the threshold and the error in the pruning rate one size larger than the searched pruning rate or the error in the searched pruning rate.

For example, when the inference accuracy $Acc_p$ is equal to or higher than the inference accuracy $Acc_{wo}$, the threshold calculating unit 14a' measures the absolute value "$E_{diff,i}$" of the different amount between the threshold and the error in the pruning rate one size larger than the searched pruning rate.

On the other hand, when the inference accuracy $Acc_p$ is lower than the inference accuracy $Acc_{wo}$, the threshold calculating unit 14a' measures the absolute value "$E_{diff,i}$" of the different amount between the threshold and the error in the searched pruning rate.

As illustrated by the following equation (7), the threshold calculating unit 14a' acquires the smallest value (different amount) "$E_{diff}$" from the calculated absolute values "$E_{diff,i}$" of the different amounts of all layers.

$$E_{diff} = \min(E_{diff,1},\ E_{diff,2},\ \ldots,\ E_{diff,i}) \qquad (7)$$

In accordance with the comparison result of the inference accuracy by the determining unit 14b', the threshold calculating unit 14a' updates the trust radius by adopting either one with a larger variation from the trust radius multiplied by a constant factor and the sum of or a difference between the trust radius and the different amount "$E_{diff}$".

For example, when the inference accuracy $Acc_p$ is equal to or higher than the inference accuracy $Acc_{wo}$, the threshold calculating unit 14a' adopts one with the larger variation from the trust radius multiplied by the constant K and the sum of the trust radius and the different amount "$E_{diff}$", and consequently, updates the trust radius so as to increase the trust radius.

On the other hand, when the inference accuracy $Acc_p$ is lower than the inference accuracy $Acc_{wo}$, the threshold calculating unit 14a' adopts one with the larger variation from the trust radius multiplied by the constant k and the difference between the trust radius and the different amount "$E_{diff}$", and consequently, updates the trust radius to so as to decrease the trust radius.

In this manner, the threshold calculating unit 14a' updates the trust radius such that the combinations of the pruning rate candidates of the multiple layers differ in each execution of selecting (in other words, searching) the pruning rate candidates.

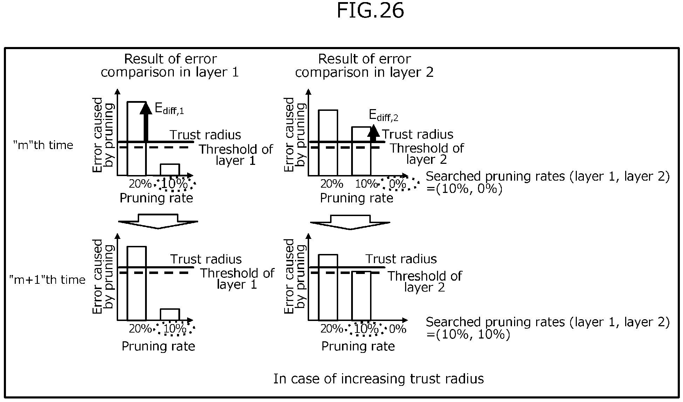

FIG. 26 is a diagram explaining an example of a trust radius update process in case of increasing the trust radius.

As illustrated in FIG. 26, it is assumed that the pruning rates searched at "m"th time are "(layer 1, layer 2)=(10%, 0%)". The threshold calculating unit 14a' calculates the absolute value "$E_{diff,1}$" of the different amount between the trust radius and the error in the pruning rate "20%" for the layer 1, and the absolute value "$E_{diff,2}$" of the different amount between the trust radius and the error in the pruning rate "10%" for the layer 2. In accordance with the above equation (7), the threshold calculating unit 14a' acquires, as the "$E_{diff}$", the different amount "$E_{diff,2}$" having a smaller value.

Then, the threshold calculating unit 14a' determines (updates) the trust radius at the "m+1"th (next) time according to the following equation (8).

(Trust radius at "m+1"th time) = max((Trust radius at "m"th time · Constant K), (Trust radius at "m"th time + $E_{diff}$)) (8)

As a result, at least a value equal to or greater than the "sum of the trust radius and the different amount" is selected as the trust radius at the "m+1"th time, so that in the "m+1"th time, a bit width different from the "m"th time is calculated as the pruning rate.

In the example of FIG. 26, the trust radius (upper limit of the threshold) at the "m+1"th search coincides with the error in the pruning rate "10%" for the layer 2. Therefore, at the "m+1"th search, the pruning rates "(layer 1, layer 2)=(10%, 10%)", which compose the combination of the pruning rates different from the previous time, are searched.

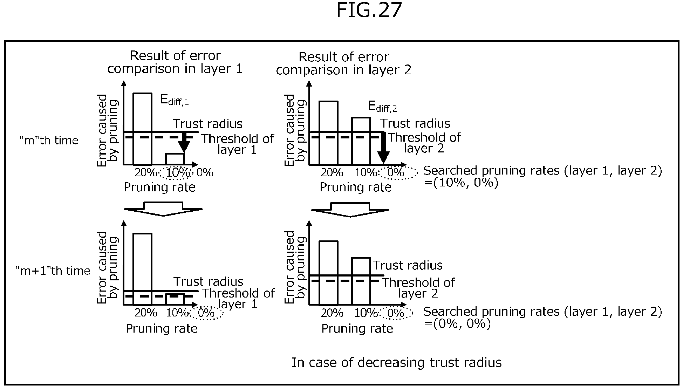

FIG. 27 is a diagram explaining an example of the trust radius update process in a case of decreasing the trust radius. As illustrated in FIG. 27, the pruning rates searched at the "m"th time are assumed to be "(layer 1, layer 2)=(10%, 0%)". The threshold calculating unit 14a' calculates the absolute value "$E_{diff,1}$" of the different amount between the trust radius and the error in the pruning rate "10%" for the layer 1, and the absolute value "$E_{diff,2}$" of the different amount between the trust radius and the error in the pruning rate "0%" for the layer 2. In accordance with the above equation (7), the threshold calculating unit 14a' acquires, as the "$E_{diff}$", the different amount "$E_{diff,1}$" having a smaller value.

Then, the threshold calculating unit 14a' determines (updates) the trust radius at the "m+1"th (next) time according to the following equation (9).

(Trust radius at "m+1"th time) = max((Trust radius at "m"th time · Constant factor), (Trust radius at "m"th time - $E_{diff}$)) (9)

As a result, at least a value equal to or greater than the "difference between the trust radius and the different amount" is selected as the trust radius at the "m+1"th time, so that in the "m+1"th time, a bit width different from the "m"th time is calculated as the pruning rate.

In the example of FIG. 27, the trust radius (upper limit of the threshold) at the "m+1"th search coincides with the error in the pruning rate "0%" for the layer 1. Therefore, at the "m+1"th search, the pruning rates "(layer 1, layer 2)=(0%, 0%), which compose the combination of the pruning rates different from the previous time, are searched.

When the above equations (8) and (9) are generalized, the trust radius at the next time can be expressed by the following equation (10).

Trust radius at next time = Current trust radius * max(Constant factor, Qscale_min) (10)

In the above equation (10), the constant factor is K or k, "Qscale_min" is "Qscale" represented by the following equation (11), and "Qscale" is represented by the following equation (12) .

Qscale_min = min(Qscale calculated in all quantization target vectors) (11)

Qscale = 1 + Qdiff / Qth (12)

In the above equation (12), "Qdiff" is the "different amount between the threshold and the quantization error in a bit width one size narrower than the provisionally calculated bit width (pruning ratio)", and "Qth" is the threshold.

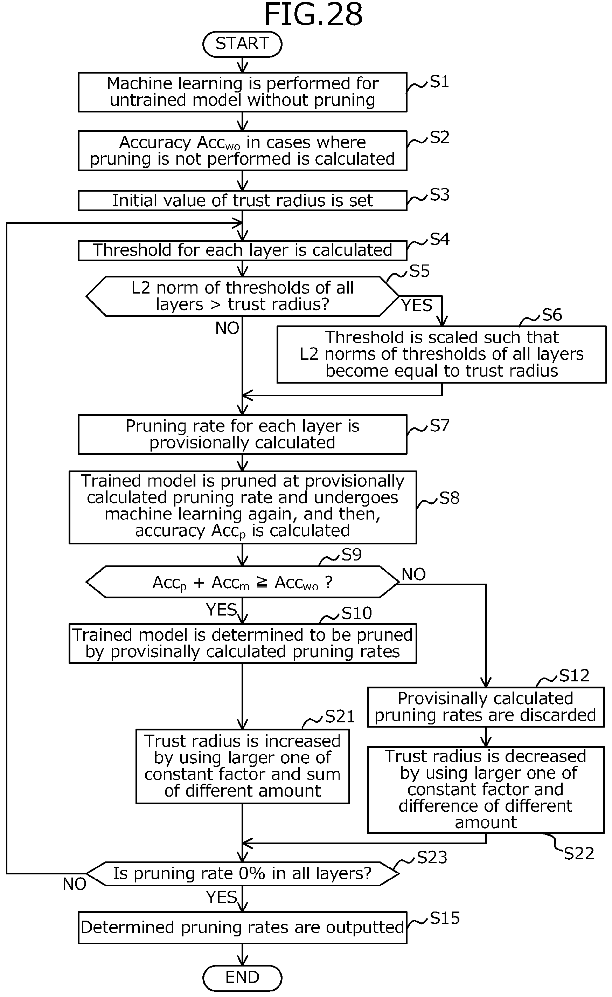

Next, referring to FIG. 28, an operation example of the server 1A according to the first modification will be described. FIG. 28 is a flowchart for explaining an operation example of the processes by the server 1A according to the first modification. FIG. 28 corresponds to the flowchart in which Steps S11, S13, and S14 of the flowchart according to the server 1 illustrated in FIG. 16 are replaced with Steps S21, S22, and S23, respectively. Also in the first modification, the threshold calculating unit 14a' sets the initial value of the trust radius in Step S3.

In Step S21, the threshold calculating unit 14a' increases the trust radius by using larger one of the multiplication

of the constant K and the "sum of the different amount", and the process proceeds to Step S23.

In Step S22, the threshold calculating unit 14a' decreases the trust radius by using larger one of the multiplication of the constant k and the "difference from the different amount", and the process proceeds to Step S23.

In Step S23, the determining unit 14b' determines whether or not the pruning rates 11d of all layers are "0%", in other words, whether or not the pruning rates satisfy the predetermined condition. If the pruning rate 11d of at least one layer is not "0%" (NO in Step S23), the process moves to Step S4.

If the pruning rates 11d of all layers are "0%" (YES in Step S23), the outputting unit 15 outputs the determined pruning rates 11d (Step S15), and the process ends.

As described above, the first modification differs from the one embodiment in the method for updating the trust radius by the threshold calculating unit 14a' and the end condition for determining the end of searching by the determining unit 14b'. Thus, the server 1A can search for the pruning rates appropriate for sufficiently downsizing the NN in shortest durations (least number of times). In addition, it is possible to omit the setting (designation) of the times of searches by the designer or the like.

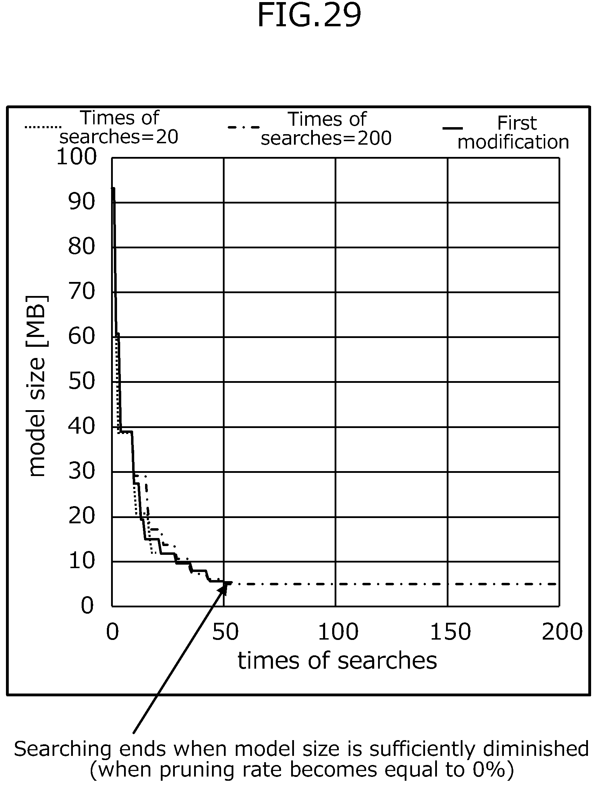

FIG. 29 is a diagram illustrating the relationship between the times of searches for the pruning rates and the model size. As illustrated in FIG. 29, according to the first modification, the searching ends at around "50"th search when the pruning rates of all layers reach "0%", in other words, when the model size is sufficiently diminished (reaches the saturated "5MB"). Thus, it is possible to inhibit the execution of the "51 to 200"th searches that would be unnecessary when, for example, the times of searches are designated to "200" or the like, which can optimize the search durations (times of searches).

<1-5-2> Second Modification

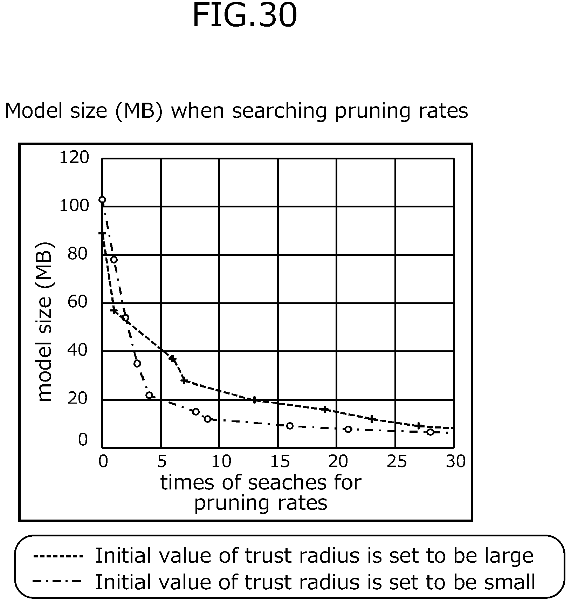

FIG. 30 is a diagram illustrating the relationship between the times of searches for the pruning rates and the model size according to settings of the initial value of the trust radius. As illustrated in FIG. 30, even when the times of searches are the same, the model size differs between the cases where the initial value of the trust radius is set to be large (see the dashed line) and where the initial value of the trust radius is set to be small (see the dash-dot line). In addition, when the initial value of the trust radius is set to be large, the times of searches required for the model size to be sufficiently diminished increases as compared with the case where the initial value of the trust radius is set to be small.

As such, depending on the initial value of the trust radius, the final model size and the times of searches for the pruning rates may vary, in other words, the performance of the servers 1 and 1A may varies.

Therefore, a second modification describes a method for suppressing variation in the performance of the servers 1 and 1A.

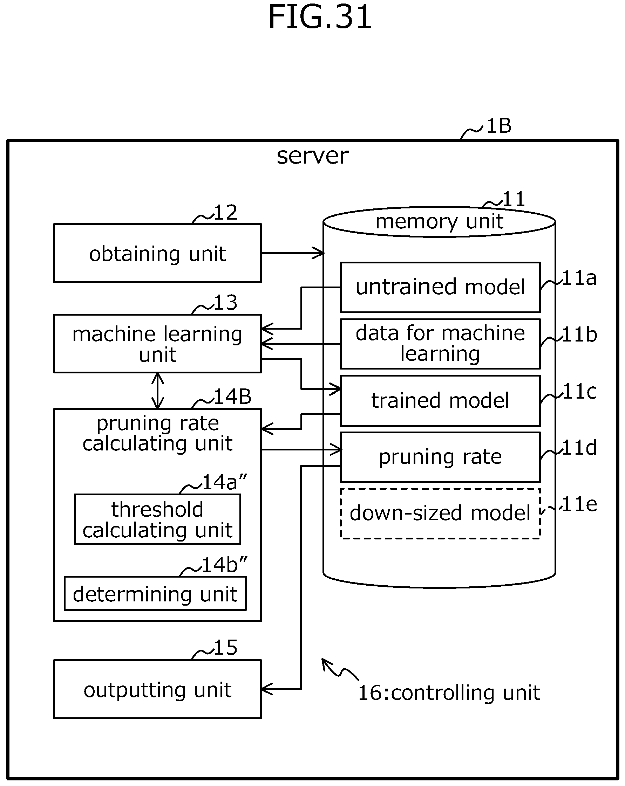

FIG. 31 is a block diagram illustrating an example of a functional configuration of a server 1B according to the second modification. As illustrated in FIG. 31, the server 1B may include a calculating unit 14B different from the server 1 of FIG. 4. The calculating unit 14B may include a threshold calculating unit 14a" and a determining unit 14b", which differ from the calculating unit 14 of FIG. 4.

In pruning a model, it is known that gradually pruning the model by using low pruning rates can maintain accuracy and compress the model at a high compression rate as compared with pruning the model at once by using high pruning rates.

As illustrated in the above equation (5), since the threshold T is set according to the reciprocal of the gradient, layers with large thresholds T represent layers with small gradients. The layers with small gradients have small effect on the accuracy even when pruned.

Therefore, the server 1B (threshold calculating unit 14a") sets the initial value of the trust radius to be a value such that the pruning rate in the first search becomes the minimum. For this, the threshold calculating unit 14a" sets the initial value of the trust radius to be a value that causes, among all layers, the layer where the threshold T is the maximum to be pruned and the remaining layer(s) to be unpruned (such that the pruning rates become "0%").

By setting the initial value of the trust radius as described above, the server 1B can further compress the model size or maintain the accuracy as compared to the case where the initial value of the trust radius is manually set, for example, to be large.

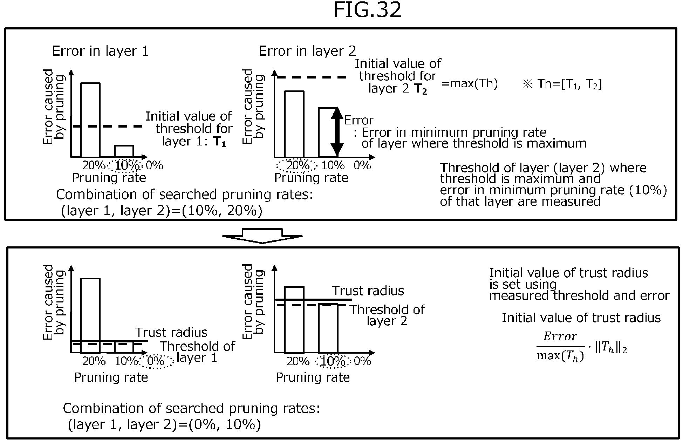

FIG. 32 is a diagram explaining an example of a setting of the initial value of the trust radius. As illustrated in the upper part of FIG. 32, when the initial value of the trust radius is not set, the combination of the pruning rates to be searched is "(layer 1, layer 2)=(10%, 20%)".

As illustrated in FIG. 32, in the first search for the pruning rates, the threshold calculate unit 14a" measures, among all layers, the threshold (max(Th)) of the layer where the threshold is the maximum and the error (Error) caused by the minimum (except for "0%") pruning rate in the layer.

Th represents a vector according to the threshold $T_1$, $T_2$,... for each layer, and in the example of FIG. 32, Th=[$T_1$, $T_2$]. The threshold (max(Th)) is the threshold for the layer where the threshold is the maximum, and is $T_2$ in the example of FIG. 32. The error (Error) is the error in the minimum pruning rate for the layer where the threshold is the maximum, and in

the example of FIG. 32, the error in the pruning rate "10%" for the layer 2 is measured.

Next, using the measured threshold and the error, the threshold calculating unit 14a" sets the initial value of the trust radius according to the following equation (13). In the following equation (13), "$\|Th\|_2$" is the L2 norm of the thresholds of all layers.

[Equation 7]

$$Initial\ valule\ of\ trust\ radius = \frac{Error}{max\ (T_h)} \cdot \|T_h\|_2 \qquad (13)$$

The threshold calculating unit 14a" sets the thresholds $T_1$, $T_2$ such that the minimum pruning rate "10%" is selected as the pruning rate of the layer having the maximum threshold (layer 2) and the pruning rate "0%" is selected in the remaining layer (layer 1) by the initial value of the calculated trust radius.

Thus, as illustrated in the lower part of FIG. 32, when the initial value of the trust radius is set and the thresholds $T_1$, $T_2$ are set, the combination of the pruning rates to be searched becomes "(layer 1, layer 2)=(0%, 10%)". Since the layer (layer 2) of the pruning target is the layer where the threshold is the maximum, in other words, the gradient is the minimum, the effect on the accuracy by the pruning can be suppressed small.

The function of the threshold calculating unit 14a" other than the process of setting the initial value of the trust radius may be similar to the function of at least one of the threshold calculating unit 14a according to the one embodiment and the threshold calculating unit 14a' according to the first modification. The determining unit 14b" may be similar to at least one of the determining unit 14b according to the one embodiment and the determining unit 14b' according to the first modification.

That is, the method according to the second modification may be realized by a combination of one of or both the one embodiment and the first modification.

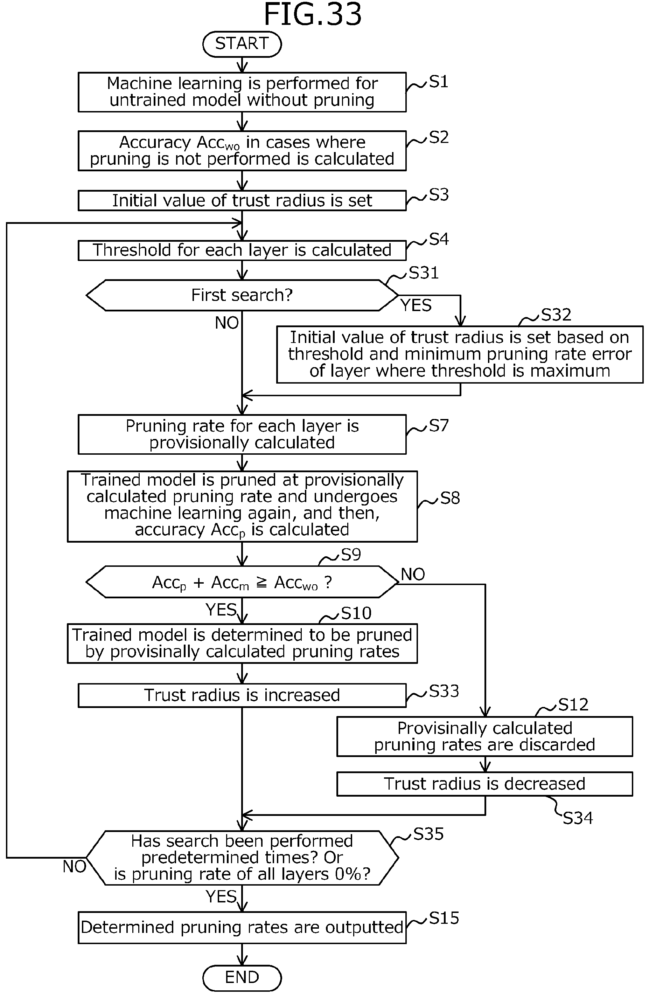

Next, referring to FIG. 33, an operation example of the server 1B according to the second modification will be described. FIG. 33 is a flowchart for explaining an operation example of the processes by the server 1B according to the second modification. FIG. 33 corresponds to the flowchart in which, of the flowchart according to the server 1A illustrated in FIG. 28, Step S3 is deleted, Steps S31 and S32 are added between Steps S4 and S5, and Steps S21, S22, and S23 are replaced with Steps S33, S34, and S35, respectively.

In Step S31, after calculating the threshold for each layer in Step S4, the threshold calculating unit 14a" determines whether or not the search is the first time. When the search is not the first time (NO in Step S31), the process proceeds to Step S5.

When the search is the first time (YES in Step S31), the threshold calculating unit 14a" sets the initial value of the trust radius based on the threshold and the minimum pruning rate error in the layer where the threshold is the maximum (Step S32), and the process proceeds to Step S5.

Steps S33, S34, and S35 may be either Steps S11, S13, and S14 illustrated in FIG. 16 or Steps S21, S22, and S23 illustrated in FIG. 28, respectively.

As described above, the second modification uses the method for setting the initial value of the trust radius by the threshold calculating unit 14a" that differs from the methods of the first embodiment and the first modification. Thus, the server 1B can suppress variation in the final model size and the times of searches for the pruning rates, and can suppress variation in the performance of the servers 1 and 1A.

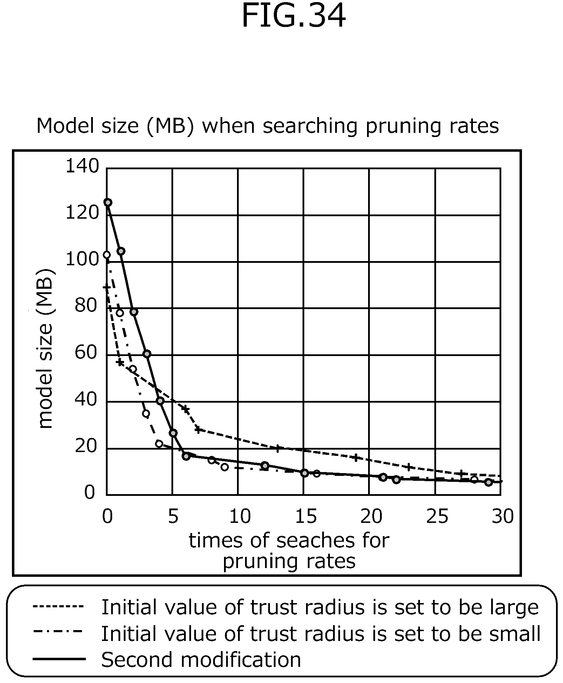

FIG. 34 is a diagram illustrating the relationship between the times of searches for the pruning rates and the model size according to the settings of the initial value of the trust radius. As illustrated in FIG. 34, when the initial value of the trust radius is set to be large (see the dashed line), the model size at the initial stage of searching (e.g., "0" to "5"th time) becomes large, in other words, the pruning rates become high.

In contrast, using the method according to the second modification, by setting the initial value of the trust radius based on the threshold and the minimum pruning rate error in the layer where the threshold is the maximum, the model size at the initial stage of the searching, in other words, the pruning rates can be reduced to the same extent as the case where the initial value of the trust radius is set to be small (see the dash-dot line).

Thus, the server 1B can suppress manual setting of the initial value (hyperparameter) of the trust radius by a designer or the like, and can dynamically set the initial value of the trust radius according to the layers of the trained models 11c. Therefore, appropriate pruning rates can be set for each model, and regardless of the model, the variation in the final model size and the times of searches for the pruning rates can be suppressed, so that variation in the performance of the servers 1 and 1A can be suppressed.

<1-6> Example of Hardware Configuration

The servers 1, 1A, and 1B according to the one embodiment and the first and second modifications may each be a virtual machine (VM; Virtual Machine) or a physical machine. The functions of the servers 1, 1A, and 1B may be realized by

one computer or by two or more computers. At least some of the functions of the servers 1, 1A, and 1B may be implemented using HW (Hardware) resources and NW (Network) resources provided by cloud environments.

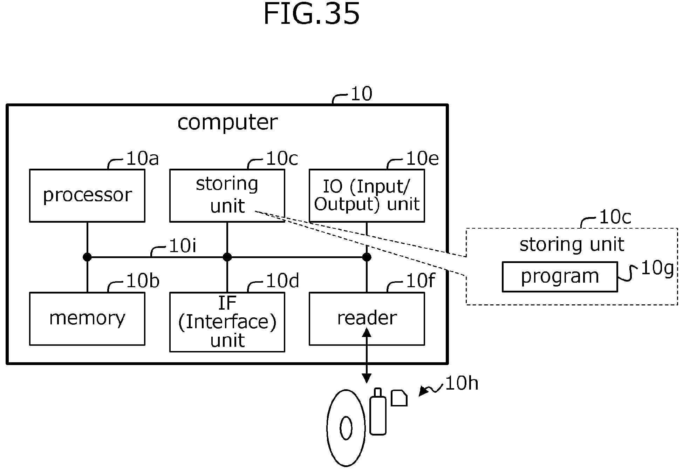

FIG. 35 is a block diagram illustrating an example of a hardware configuration of a computer 10. Hereinafter, the computer 10 is exemplified as the hardware (HW) that realizes each function of the servers 1, 1A, and 1B. When multiple computers are used as the HW resources for realizing each function of the servers 1, 1A, and 1B, each computer may include the HW configuration illustrated in FIG. 35.

As illustrated in FIG. 35, the computer 10 may illustratively include, as the HW configuration, a processor 10a, a memory 10b, a storing unit 10c, an IF (Interface) unit 10d, an IO (Input/Output) unit 10e, and a reader 10f.

The processor 10a is an example of an arithmetic processing device that performs various controls and calculations. The processor 10a may be connected to each block in the computer 10 via a bus 10i so as to mutually communicable. The processor 10a may be a multi-processor including multiple processors or a multi-core processor having multiple processor cores, or may be configured to have multiple multi-core processors.

The processor 10a may be, for example, an integrated circuit (IC; Integrated Circuit) such as a CPU (Central Processing Unit), an MPU (Micro Processing Unit), a GPU (Graphics Processing Unit), an APU (Accelerated Processing Unit), a DSP (Digital Signal Processor), an ASIC (Application Specific IC), or an FPGA (Field-Programmable Gate Array) .

As the processor 10a, a combination of two or more of the integrated circuits described above may be used. As an example, the computer 10 may include first and second processors 10a. The first processor 10a is an example of a CPU that executes a program 10g (machine learning program) that realizes all or a part of various functions of the computer 10. For example, based on the programs 10g, the first processor 10a may realize the functions of the obtaining unit 12, the calculating unit 14, 14A or 14B, and the outputting unit 15 of the server 1, 1A or 1B (see FIG. 4, 25, or 31). The second processor 10a is an example of an accelerator that executes an arithmetic process used for NN calculation such as matrix calculation, and may realize, for example, the function of the machine learning unit 13 of the server 1, 1A, or 1B (see FIG. 4, 25, or 31).

The memory 10b is an example of an HW that stores various data and programs. The memory 10b may be, for example, at least one of a volatile memory such as a DRAM (Dynamic Random Access Memory) and a nonvolatile memory such as a PM (Persistent Memory).

The storing unit 10c is an example of an HW that stores information such as various data and programs. The storing unit 10c may be, for example, a magnetic disk device such as an HDD (Hard Disk Drive), a semiconductor drive device such as an SSD (Solid State Drive), or various storage devices such as nonvolatile memories. The non-volatile memory may be, for example, a flash memory, an SCM (Storage Class Memory), a ROM (Read Only Memory), or the like.

The storing unit 10c may store the program 10g. For example, the processor 10a of the servers 1, 1A, and 1B can realize functions as the controlling unit 16 of the servers 1, 1A, and 1B (see FIG. 4, 25, or 31) by expanding the program 10g stored into the storing unit 10c onto the memory 10b and executing the program 10g.

The memory unit 11 illustrated in FIG. 4, 25, or 31 may be realized by a storage area included in at least one of the memory 10b and the storing unit 10c.

The IF unit 10d is an example of a communication IF that controls the connection and communication with the network. For example, the IF unit 10d may include an adapter compatible with a LAN (Local Area Network) such as Ethernet (registered trademark), an optical communication such as FC (Fibre Channel), or the like. The adapter may be adapted to a communication scheme of at least one of a wireless scheme and a wired scheme. For example, the servers 1, 1A, and 1B may be connected to a non-illustrated computer via the IF unit 10d so as to be mutually communicable. One or both of the functions of the obtaining unit 12 and the outputting unit 15 illustrated in FIG. 4, 25, or 31 may be realized by the IF unit 10d. For example, the program 10g may be downloaded from a network to the computer 10 via the communication IF and stored into the storing unit 10c.

The IO unit 10e may include one of an input device and an output device, or both. The input device may be, for example, a keyboard, a mouse, or a touch panel. The output device may be, for example, a monitor, a projector, or a printer. For example, the outputting unit 15 illustrated in FIG. 4, 25, or 31 may output the pruning rates 11d to the output device of the IO unit 10e to display the pruning rates 11d.

The reader 10f is an example of a reader that reads out information on the data and programs recorded on the recording medium 10h. The reader 10f may include a connection terminal or a device to which the recording medium 10h can be connected or inserted. The reader 10f may be, for example, an adapter compatible with a USB (Universal Serial Bus) or the like, a drive device that accesses a recording disk, a card reader that accesses a flash memory such as an SD card, etc. The recording medium 10h may store the program 10g, or the reader 10f may read the program 10g from the recording medium 10h and store it into the storing unit 10c.

The recording medium 10h may illustratively be a non-transitory computer-readable recording medium such as a magnetic/optical disk or a flash memory. The magnetic/optical disk may illustratively be a flexible disk, a CD (Compact Disc), a DVD (Digital Versatile Disc), a Blu-ray disk, an HVD (Holographic Versatile Disc), or the like. The flash memory may illustratively be a solid state memory such as a USB memory or an SD card.

The HW configuration of the computer 10 described above is merely illustrative. Thus, the HW of the computer 10

may appropriately undergo increase or decrease **(e.g.,** addition or deletion of arbitrary blocks), division, integration in arbitrary combinations, and addition or deletion of the bus. For example, the servers 1, 1A, and 1B may omit at least one of the IO unit 10e and the reader 10f.

<2> Miscellaneous

The above-described technique according to the embodiment and the first and second modifications can be modified and implemented as follows.

For example, the obtaining unit 12, the machine learning unit 13, the calculating unit 14, 14A or 14B, and the outputting unit 15 included in the server **1,** 1A or 1B illustrated in FIG. **4,** 25, or 31 may be merged or may each be divided.

For example, the server **1,** 1A, or 1B illustrated in FIG. **4,** 25, or 31 may be configured to realize each processing function by multiple devices cooperating with each other via networks. As an example, in the server 1, 1A, or 1B, the obtaining unit 12 and the outputting unit 15 may be a web server and an application server, the machine learning unit 13 and the calculating unit 14, 14A or 14B may be an application server, the memory unit 11 may be a database server, or the like. In this case, the web server, the application server, and the DB server may realize the processing function as the server 1, 1A, or 1B by cooperating with each other via networks.

REFERENCE SIGNS LIST

| | |
|---|---|
| 1, 1A, 1B | server |
| 10 | computer |
| 11 | memory unit |
| 11a | untrained model |
| 11b | data for machine learning |
| 11c | trained model |
| 11d | pruning rate |
| 11e | down-sized model |
| 12 | obtaining unit |
| 13 | machine learning unit |
| 14, 14A, 14B | pruning rate calculating unit |
| 14a, 14a', 14a" | threshold calculating unit |
| 14b, 14b', 14b" | determining unit |
| 15 | outputting unit |
| 16 | controlling unit |

**Claims**

**1.** A machine learning program comprising instructions which, when executed by a computer, cause the computer to execute a process comprising:

calculating, for each of a plurality of layers included in a trained model (11c) of a neural network, thresholds of errors in tensors between before and after reduction one for each element of the plurality of layers, the thresholds being upper limits of reduction ratios of the elements of the plurality of layers, the thresholds being scaled such that an L2 norm of thresholds of the plurality of layers becomes equal to or smaller than a threshold upper limit;
selecting, for each of the plurality of layers, a reduction ratio candidate to be applied to each of the plurality of layers based on a plurality of the thresholds calculated for each of the layers and errors for each of the layers in tensors between before and after reduction in cases where the elements are reduced by each of a plurality of reduction ratio candidates in each of the plurality of layers; and
determining, for each of the plurality of layers, a reduction ratio to be applied to each of the plurality of layers based on inference accuracy of the trained model (11c) and inference accuracy of a reduced model after machine learning, the reduced model being obtained by reducing each element of the plurality of layers in the trained model (11c) according to the reduction ratio candidate to be applied;
wherein the calculating the thresholds includes setting an initial value of the threshold upper limit so as to calculate thresholds that causes, among the plurality of layers, an element of a layer in which the threshold is maximum to be reduced and that causes an element of a layer other than the layer in which the threshold is maximum not to be reduced;

wherein the determining the reduction ratios includes:

discarding a plurality of the selected reduction ratio candidates when a sum of the inference accuracy of the reduced model after machine learning and a margin is lower than the inference accuracy of the trained model (11c); and
determining to adopt a plurality of the selected reduction ratio candidates as the reduction ratios to be applied to each of the plurality of layers when the sum of the inference accuracy of the reduced model after machine learning and the margin is equal to or higher than the inference accuracy of the trained model (11c);
wherein the reduction ratios to be applied to each of the plurality of layers correspond to a pruning rate at each layer,
repeating execution of the calculating the thresholds, the selecting the reduction ratio candidates, and the determining the reduction ratios until the reduction ratios satisfy a predetermined condition,
outputting the reduction ratios determined when the predetermined condition is satisfied, and
wherein the predetermined condition is satisfied when size of a memory of the computer required to store the reduced model reaches a saturated size of the memory.

**2.** The machine learning program according to claim 1, wherein the calculating the thresholds includes calculating the thresholds based on values of loss functions of the trained model (11c) at a time of reducing elements of each of the plurality of layers and weight gradients of each of the plurality of layers.

**3.** The machine learning program according to claim 1 or **2,** wherein the calculating the thresholds includes:

decreasing the threshold upper limit when the sum of the inference accuracy of the reduced model after machine learning and the margin is lower than the inference accuracy of the trained model (11c); and
increasing the threshold upper limit when the sum of the inference accuracy of the reduced model after machine learning and the margin is equal to or higher than the inference accuracy of the trained model (11c).

**4.** The machine learning program according to claim 3, wherein the calculating the thresholds includes updating the threshold upper limit such that combinations of reduction ratio candidates of the plurality of layers differ in each execution of selecting the reduction ratio candidates.

**5.** A computer-implemented method for machine learning, the method comprising:

calculating, for each of a plurality of layers included in a trained model (11c) of a neural network, thresholds of errors in tensors between before and after reduction one for each element of the plurality of layers, the thresholds being upper limits of reduction ratios of the elements of the plurality of layers, the thresholds being scaled such that an L2 norm of thresholds of the plurality of layers becomes equal to or smaller than a threshold upper limit;
selecting, for each of the plurality of layers, a reduction ratio candidate to be applied to each of the plurality of layers based on a plurality of the thresholds calculated for each of the layers and errors for each of the layers in tensors between before and after reduction in cases where the elements are reduced by each of a plurality of reduction ratio candidates in each of the plurality of layers;
determining, for each of the plurality of layers, a reduction ratio to be applied to each of the plurality of layers based on inference accuracy of the trained model (11c) and inference accuracy of a reduced model after machine learning, the reduced model being obtained by reducing each element of the plurality of layers in the trained model (11c) according to the reduction ratio candidate to be applied;
wherein the calculating the thresholds includes setting an initial value of the threshold upper limit so as to calculate thresholds that causes, among the plurality of layers, an element of a layer in which the threshold is maximum to be reduced and that causes an element of a layer other than the layer in which the threshold is maximum not to be reduced,
wherein the determining the reduction ratios includes:

discarding a plurality of the selected reduction ratio candidates when a sum of the inference accuracy of the reduced model after machine learning and a margin is lower than the inference accuracy of the trained model (11c); and
determining to adopt a plurality of the selected reduction ratio candidates as the reduction ratios to be applied to each of the plurality of layers when the sum of the inference accuracy of the reduced model after machine learning and the margin is equal to or higher than the inference accuracy of the trained model (11c);
wherein the reduction ratios to be applied to each of the plurality of layers correspond to a pruning rate at each

layer,
repeating execution of the calculating the thresholds, the selecting the reduction ratio candidates, and the determining the reduction ratios until the reduction ratios satisfy a predetermined condition,
outputting the reduction ratios determined when the predetermined condition is satisfied, and

wherein the predetermined condition is satisfied when size of a memory of the computer required to store the reduced model reaches a saturated size of the memory.

**6.** The method according to claim 5, wherein the calculating the thresholds includes calculating the thresholds based on values of loss functions of the trained model (11c) at a time of reducing elements of each of the plurality of layers and weight gradients of each of the plurality of layers.

**7.** The method according to claims 5 or 6, wherein the calculating the thresholds includes:

decreasing the threshold upper limit when the sum of the inference accuracy of the reduced model after machine learning and the margin is lower than the inference accuracy of the trained model (11c); and
increasing the threshold upper limit when the sum of the inference accuracy of the reduced model after machine learning and the margin is equal to or higher than the inference accuracy of the trained model (11c).

**8.** The method according to claim 7, wherein the calculating the thresholds includes updating the threshold upper limit such that combinations of reduction ratio candidates of the plurality of layers differ in each execution of selecting the reduction ratio candidates.

**9.** An information processing apparatus comprising a controller to execute a process comprising:

calculating, for each of a plurality of layers included in a trained model (11c) of a neural network, thresholds of errors in tensors between before and after reduction one for each element of the plurality of layers, the thresholds being upper limits of reduction ratios of the elements of the plurality of layers, the thresholds being scaled such that an L2 norm of thresholds of the plurality of layers becomes equal to or smaller than a threshold upper limit;
selecting, for each of the plurality of layers, a reduction ratio candidate to be applied to each of the plurality of layers based on a plurality of the thresholds calculated for each of the layers and errors for each of the layers in tensors between before and after reduction in cases where the elements are reduced by each of a plurality of reduction ratio candidates in each of the plurality of layers;
determining, for each of the plurality of layers, a reduction ratio to be applied to each of the plurality of layers based on inference accuracy of the trained model (11c) and inference accuracy of a reduced model after machine learning, the reduced model being obtained by reducing each element of the plurality of layers in the trained model (11c) according to the reduction ratio candidate to be applied;
wherein the calculating the thresholds includes setting an initial value of the threshold upper limit so as to calculate thresholds that causes, among the plurality of layers, an element of a layer in which the threshold is maximum to be reduced and that causes an element of a layer other than the layer in which the threshold is maximum not to be reduced,
wherein the determining the reduction ratios includes:

discarding a plurality of the selected reduction ratio candidates when a sum of the inference accuracy of the reduced model after machine learning and a margin is lower than the inference accuracy of the trained model (11c); and
determining to adopt a plurality of the selected reduction ratio candidates as the reduction ratios to be applied to each of the plurality of layers when the sum of the inference accuracy of the reduced model after machine learning and the margin is equal to or higher than the inference accuracy of the trained model (11c);
wherein the reduction ratios to be applied to each of the plurality of layers correspond to a pruning rate at each layer,
repeating execution of the calculating the thresholds, the selecting the reduction ratio candidates, and the determining the reduction ratios until the reduction ratios satisfy a predetermined condition,
outputting the reduction ratios determined when the predetermined condition is satisfied, and
wherein the predetermined condition is satisfied when size of a memory of the computer required to store the reduced model reaches a saturated size of the memory.

## Patentansprüche

1. Maschinenlernprogramm, umfassend Anweisungen, die, wenn sie von einem Computer ausgeführt werden, den Computer veranlassen, einen Prozess auszuführen, umfassend:

   Berechnen, für jede einer Vielzahl von Schichten, die in einem trainierten Modell (11c) eines neuronalen Netzes eingeschlossen sind, von Fehlerschwellenwerten in Tensoren zwischen vor und nach einer Reduktion, einem für jedes Element der Vielzahl von Schichten, wobei die Schwellenwerte Obergrenzen von Reduktionsverhältnissen der Elemente der Vielzahl von Schichten sind, wobei die Schwellenwerte so skaliert sind, dass eine L2-Norm der Schwellenwerte der Vielzahl von Schichten gleich oder kleiner als eine Schwellenwert-Obergrenze ist;
   Auswählen, für jede der Vielzahl von Schichten, eines Reduktionsverhältnis-Kandidaten, der auf jede der Vielzahl von Schichten anzuwenden ist, basierend auf einer Vielzahl von Schwellenwerten, die für jede der Schichten berechnet sind, und auf Fehlern für jede der Schichten in Tensoren zwischen vor und nach der Reduktion in Fällen, in denen die Elemente in jeder der Vielzahl von Schichten um jeweils einen der mehrere Reduktionsverhältnis-Kandidaten reduziert sind; und
   Bestimmen, für jede der Vielzahl von Schichten, eines Reduktionsverhältnisses, das auf jede der Vielzahl von Schichten anzuwenden ist, basierend auf einer Inferenzgenauigkeit des trainierten Modells (11c) und einer Inferenzgenauigkeit eines reduzierten Modells nach dem maschinellen Lernen, wobei das reduzierte Modell dadurch erhalten wird, dass jedes Element der Vielzahl von Schichten im trainierten Modell (11c) entsprechend dem anzuwendenden Reduktionsverhältnis-Kandidaten reduziert wird;
   wobei das Berechnen der Schwellenwerte ein Festlegen eines anfänglichen Werts für die Schwellenwert-Obergrenze einschließt, um Schwellenwerte zu berechnen, die bewirken, dass unter der Vielzahl von Schichten ein Element einer Schicht, in der der Schwellenwert am höchsten ist, reduziert wird, und die bewirken, dass ein Element einer anderen Schicht als derjenigen, in der der Schwellenwert am höchsten ist, nicht reduziert wird;
   wobei das Bestimmen der Reduktionsverhältnisse Folgendes einschließt:

      Verwerfen einer Vielzahl der ausgewählten Reduktionsverhältnis-Kandidaten, wenn eine Summe aus der Inferenzgenauigkeit des reduzierten Modells nach dem maschinellen Lernen und einer Marge niedriger ist als die Inferenzgenauigkeit des trainierten Modells (11c); und
      Bestimmen, eine Vielzahl der ausgewählten Reduktionsverhältnis-Kandidaten als die auf jede der Vielzahl von Schichten anzuwendenden Reduktionsverhältnisse zu übernehmen, wenn die Summe aus der Inferenzgenauigkeit des reduzierten Modells nach dem maschinellen Lernen und der Marge gleich oder höher ist als die Inferenzgenauigkeit des trainierten Modells (11c);
      wobei die auf jede der Vielzahl von Schichten anzuwendenden Reduktionsverhältnisse einer Beschneidungsrate in jeder Schicht entsprechen,
      wiederholtes Ausführen des Berechnens der Schwellenwerte, des Auswählens der Reduktionsverhältnis-Kandidaten und des Bestimmens der Reduktionsverhältnisse, bis die Reduktionsverhältnisse eine vorbestimmte Bedingung erfüllen,
      Ausgeben der bestimmten Reduktionsverhältnisse, wenn die vorbestimmte Bedingung erfüllt ist, und
      wobei die vorbestimmte Bedingung erfüllt ist, wenn die Größe eines zum Speichern des reduzierten Modells erforderlichen Speichers des Computers eine Sättigungsgröße des Speichers erreicht.

2. Maschinenlernprogramm nach Anspruch 1, wobei das Berechnen der Schwellenwerte ein Berechnen der Schwellenwerte basierend auf Werten von Verlustfunktionen des trainierten Modells (11c) zum Zeitpunkt des Reduzierens von Elementen jeder der Vielzahl von Schichten und von Gewichtsgradienten jeder der Vielzahl von Schichten einschließt.

3. Maschinenlernprogramm nach Anspruch 1 oder 2, wobei das Berechnen der Schwellenwerte Folgendes einschließt:

   Verringern der Schwellenwert-Obergrenze, wenn die Summe aus der Inferenzgenauigkeit des reduzierten Modells nach dem maschinellen Lernen und einer Marge niedriger ist als die Inferenzgenauigkeit des trainierten Modells (11c); und
   Erhöhen der Schwellenwert-Obergrenze, wenn die Summe aus der Inferenzgenauigkeit des reduzierten Modells nach dem maschinellen Lernen und einer Marge gleich oder höher ist als die Inferenzgenauigkeit des trainierten Modells (11c).

4. Maschinenlernprogramm nach Anspruch 3, wobei das Berechnen der Schwellenwerte ein Aktualisieren der Schwellenwert-Obergrenze einschließt, sodass Kombinationen von Reduktionsverhältnis-Kandidaten der Vielzahl

von Schichten bei jeder Ausführung des Auswählens der Reduktionsverhältnis-Kandidaten unterschiedlich sind.

**5.** Computerimplementiertes Verfahren zum maschinellen Lernen, das Verfahren umfassend:

Berechnen, für jede einer Vielzahl von Schichten, die in einem trainierten Modell (11c) eines neuronalen Netzes eingeschlossen sind, von Fehlerschwellenwerten in Tensoren zwischen vor und nach einer Reduktion, einem für jedes Element der Vielzahl von Schichten, wobei die Schwellenwerte Obergrenzen der Reduktionsverhältnisse der Elemente der Vielzahl von Schichten sind, wobei die Schwellenwerte so skaliert sind, dass eine L2-Norm der Schwellenwerte der Vielzahl von Schichten gleich oder kleiner als eine Schwellenwert-Obergrenze ist;
Auswählen, für jede der Vielzahl von Schichten, eines Reduktionsverhältnis-Kandidaten, der auf jede der Vielzahl von Schichten anzuwenden ist, basierend auf einer Vielzahl von Schwellenwerten, die für jede der Schichten berechnet sind, und auf Fehlern für jede der Schichten in Tensoren zwischen vor und nach der Reduktion in Fällen, in denen die Elemente in jeder der Vielzahl von Schichten um jeweils einen der mehreren Reduktionsverhältnis-Kandidaten reduziert sind;
Bestimmen, für jede der Vielzahl von Schichten, eines Reduktionsverhältnisses, das auf jede der Vielzahl von Schichten anzuwenden ist, basierend auf einer Inferenzgenauigkeit des trainierten Modells (11c) und einer Inferenzgenauigkeit eines reduzierten Modells nach dem maschinellen Lernen, wobei das reduzierte Modell dadurch erhalten wird, dass jedes Element der Vielzahl von Schichten im trainierten Modell (11c) entsprechend dem anzuwendenden Reduktionsverhältnis-Kandidaten reduziert wird;
wobei das Berechnen der Schwellenwerte ein Festlegen eines anfänglichen Werts für die Schwellenwert-Obergrenze einschließt, um Schwellenwerte zu berechnen, die bewirken, dass unter der Vielzahl von Schichten ein Element einer Schicht, in der der Schwellenwert am höchsten ist, reduziert wird, und die bewirken, dass ein Element einer anderen Schicht als derjenigen, in der der Schwellenwert am höchsten ist, nicht reduziert wird, wobei das Bestimmen der Reduktionsverhältnisse Folgendes einschließt:

Verwerfen einer Vielzahl der ausgewählten Reduktionsverhältnis-Kandidaten, wenn eine Summe aus der Inferenzgenauigkeit des reduzierten Modells nach dem maschinellen Lernen und einer Marge niedriger ist als die Inferenzgenauigkeit des trainierten Modells (11c); und
Bestimmen, eine Vielzahl der ausgewählten Reduktionsverhältnis-Kandidaten als die auf jede der Vielzahl von Schichten anzuwendenden Reduktionsverhältnisse zu übernehmen, wenn die Summe aus der Inferenzgenauigkeit des reduzierten Modells nach dem maschinellen Lernen und der Marge gleich oder höher ist als die Inferenzgenauigkeit des trainierten Modells (11c);
wobei die auf jede der Vielzahl von Schichten anzuwendenden Reduktionsverhältnisse einer Beschneidungsrate in jeder Schicht entsprechen,
wiederholtes Ausführen des Berechnens der Schwellenwerte, des Auswählens der Reduktionsverhältnis-Kandidaten und des Bestimmens der Reduktionsverhältnisse, bis die Reduktionsverhältnisse eine vorbestimmte Bedingung erfüllen,
Ausgeben der bestimmten Reduktionsverhältnisse, wenn die vorbestimmte Bedingung erfüllt ist, und

wobei die vorbestimmte Bedingung erfüllt ist, wenn die Größe eines zum Speichern des reduzierten Modells erforderlichen Speichers des Computers eine Sättigungsgröße des Speichers erreicht.

**6.** Verfahren nach Anspruch 5, wobei das Berechnen der Schwellenwerte ein Berechnen der Schwellenwerte basierend auf Werten von Verlustfunktionen des trainierten Modells (11c) zum Zeitpunkt des Reduzierens von Elementen jeder der Vielzahl von Schichten und von Gewichtsgradienten jeder der Vielzahl von Schichten einschließt.

**7.** Verfahren nach den Ansprüchen 5 oder 6, wobei das Berechnen der Schwellenwerte Folgendes einschließt:

Verringern der Schwellenwert-Obergrenze, wenn die Summe aus der Inferenzgenauigkeit des reduzierten Modells nach dem maschinellen Lernen und einer Marge niedriger ist als die Inferenzgenauigkeit des trainierten Modells (11c); und
Erhöhen der Schwellenwert-Obergrenze, wenn die Summe aus der Inferenzgenauigkeit des reduzierten Modells nach dem maschinellen Lernen und einer Marge gleich oder höher ist als die Inferenzgenauigkeit des trainierten Modells (11c).

**8.** Verfahren nach Anspruch 7, wobei das Berechnen der Schwellenwerte ein Aktualisieren der Schwellenwert-Obergrenze einschließt, sodass Kombinationen von Reduktionsverhältnis-Kandidaten der Vielzahl von Schichten bei jeder Ausführung des Auswählens der Reduktionsverhältnis-Kandidaten unterschiedlich sind.

**9.** Informationsverarbeitungseinrichtung, umfassend eine Steuereinheit, um einen Prozess auszuführen, umfassend:

Berechnen, für jede einer Vielzahl von Schichten, die in einem trainierten Modell (11c) eines neuronalen Netzes eingeschlossen sind, von Fehlerschwellenwerten in Tensoren zwischen vor und nach einer Reduktion, einem für jedes Element der Vielzahl von Schichten, wobei die Schwellenwerte Obergrenzen von Reduktionsverhältnissen der Elemente der Vielzahl von Schichten sind, wobei die Schwellenwerte so skaliert sind, dass eine L2-Norm der Schwellenwerte der Vielzahl von Schichten gleich oder kleiner als eine Schwellenwert-Obergrenze ist;
Auswählen, für jede der Vielzahl von Schichten, eines Reduktionsverhältnis-Kandidaten, der auf jede der Vielzahl von Schichten anzuwenden ist, basierend auf einer Vielzahl von Schwellenwerten, die für jede der Schichten berechnet sind, und auf Fehlern für jede der Schichten in Tensoren zwischen vor und nach der Reduktion in Fällen, in denen die Elemente in jeder der Vielzahl von Schichten um jeweils einen der mehreren Reduktionsverhältnis-Kandidaten reduziert sind;
Bestimmen, für jede der Vielzahl von Schichten, eines Reduktionsverhältnisses, das auf jede der Vielzahl von Schichten anzuwenden ist, basierend auf einer Inferenzgenauigkeit des trainierten Modells (11c) und einer Inferenzgenauigkeit eines reduzierten Modells nach dem maschinellen Lernen, wobei das reduzierte Modell dadurch erhalten wird, dass jedes Element der Vielzahl von Schichten im trainierten Modell (11c) entsprechend dem anzuwendenden Reduktionsverhältnis-Kandidaten reduziert wird;
wobei das Berechnen der Schwellenwerte ein Festlegen eines anfänglichen Werts für die Schwellenwert-Obergrenze einschließt, um Schwellenwerte zu berechnen, die bewirken, dass unter der Vielzahl von Schichten ein Element einer Schicht, in der der Schwellenwert am höchsten ist, reduziert wird, und die bewirken, dass ein Element einer anderen Schicht als derjenigen, in der der Schwellenwert am höchsten ist, nicht reduziert wird,
wobei das Bestimmen der Reduktionsverhältnisse Folgendes einschließt:

Verwerfen einer Vielzahl der ausgewählten Reduktionsverhältnis-Kandidaten, wenn eine Summe aus der Inferenzgenauigkeit des reduzierten Modells nach dem maschinellen Lernen und einer Marge niedriger ist als die Inferenzgenauigkeit des trainierten Modells (11c); und
Bestimmen, eine Vielzahl der ausgewählten Reduktionsverhältnis-Kandidaten als die auf jede der Vielzahl von Schichten anzuwendenden Reduktionsverhältnisse zu übernehmen, wenn die Summe aus der Inferenzgenauigkeit des reduzierten Modells nach dem maschinellen Lernen und der Marge gleich oder höher ist als die Inferenzgenauigkeit des trainierten Modells (11c);
wobei die auf jede der Vielzahl von Schichten anzuwendenden Reduktionsverhältnisse einer Beschneidungsrate in jeder Schicht entsprechen,
wiederholtes Ausführen des Berechnens der Schwellenwerte, des Auswählens der Reduktionsverhältnis-Kandidaten und des Bestimmens der Reduktionsverhältnisse, bis die Reduktionsverhältnisse eine vorbestimmte Bedingung erfüllen,
Ausgeben der bestimmten Reduktionsverhältnisse, wenn die vorbestimmte Bedingung erfüllt ist, und
wobei die vorbestimmte Bedingung erfüllt ist, wenn die Größe eines zum Speichern des reduzierten Modells erforderlichen Speichers des Computers eine Sättigungsgröße des Speichers erreicht.

## Revendications

**1.** Programme d'apprentissage automatique comprenant des instructions qui, lorsqu'elles sont mises en œuvre par un ordinateur, amènent l'ordinateur à mettre en œuvre un processus comprenant :

le calcul, pour chacune d'une pluralité de couches incluses dans un modèle entraîné (11c) d'un réseau neuronal, de seuils d'erreurs dans des tenseurs entre avant et après réduction, un pour chaque élément de la pluralité de couches, les seuils étant des limites supérieures de rapports de réduction des éléments de la pluralité de couches, les seuils étant mis à l'échelle de sorte qu'une norme L2 de seuils de la pluralité de couches devienne égale ou plus petite qu'une limite supérieure de seuil ;
la sélection, pour chacune de la pluralité de couches, un candidat de rapport de réduction à appliquer à chacune de la pluralité de couches sur la base d'une pluralité des seuils calculés pour chacune des couches et des erreurs pour chacune des couches dans des tenseurs entre avant et après réduction dans les cas où les éléments sont réduits par chacun d'une pluralité de candidats de rapport de réduction dans chacune de la pluralité de couches ; et
la détermination, pour chacune de la pluralité de couches, d'un rapport de réduction à appliquer à chacune de la pluralité de couches sur la base d'une précision d'inférence du modèle entraîné (11c) et d'une précision d'inférence d'un modèle réduit après apprentissage automatique, le modèle réduit étant obtenu en réduisant

chaque élément de la pluralité de couches dans le modèle entraîné (11c) selon le candidat de rapport de réduction à appliquer ;
dans lequel le calcul des seuils inclut le réglage d'une valeur initiale de la limite supérieure de seuil de manière à calculer des seuils qui amène, parmi la pluralité de couches, un élément d'une couche dans laquelle le seuil est maximal à être réduit et qui amène un élément d'une couche autre que la couche dans laquelle le seuil est maximal à ne pas être réduit ;
dans lequel la détermination des rapports de réduction inclut :

le rejet d'une pluralité des candidats de rapport de réduction sélectionnés lorsqu'une somme de la précision d'inférence du modèle réduit après apprentissage automatique et d'une marge est inférieure à la précision d'inférence du modèle entraîné (11c) ; et
la détermination d'adopter une pluralité des candidats de rapport de réduction sélectionnés comme les rapports de réduction à appliquer à chacune de la pluralité de couches lorsque la somme de la précision d'inférence du modèle réduit après apprentissage automatique et de la marge est égale ou supérieure à la précision d'inférence du modèle entraîné (11c) ;
dans lequel les rapports de réduction à appliquer à chacune de la pluralité de couches correspondent à un taux d'élagage au niveau de chaque couche,
la répétition de l'exécution du calcul des seuils, de la sélection des candidats de rapport de réduction et de la détermination des rapports de réduction jusqu'à ce que les rapports de réduction satisfassent à une condition prédéterminée,
la sortie des rapports de réduction déterminés lorsque la condition prédéterminée est satisfaite, et
dans lequel la condition prédéterminée est satisfaite lorsqu'une taille d'une mémoire de l'ordinateur requise pour stocker le modèle réduit atteint une taille saturée de la mémoire.

2. Programme d'apprentissage automatique selon la revendication 1, dans lequel le calcul des seuils inclut le calcul des seuils sur la base de valeurs de fonctions de perte du modèle entraîné (11c) à un moment de réduction d'éléments de chacune de la pluralité de couches et de gradients de poids de chacune de la pluralité de couches.

3. Programme d'apprentissage automatique selon la revendication 1 ou la revendication 2, dans lequel le calcul des seuils inclut :

la diminution de la limite supérieure de seuil lorsque la somme de la précision d'inférence du modèle réduit après apprentissage automatique et de la marge est inférieure à la précision d'inférence du modèle entraîné (11c) ; et
l'augmentation de la limite supérieure de seuil lorsque la somme de la précision d'inférence du modèle réduit après apprentissage automatique et de la marge est égale ou supérieure à la précision d'inférence du modèle entraîné (11c).

4. Programme d'apprentissage automatique selon la revendication 3, dans lequel le calcul des seuils inclut la mise à jour de la limite supérieure de seuil de sorte que des combinaisons de candidats de rapport de réduction de la pluralité de couches diffèrent dans chaque exécution de la sélection des candidats de rapport de réduction.

5. Procédé mis en œuvre par ordinateur pour l'apprentissage automatique, le procédé comprenant :

le calcul, pour chacune d'une pluralité de couches incluses dans un modèle entraîné (11c) d'un réseau neuronal, de seuils d'erreurs dans des tenseurs entre avant et après réduction, un pour chaque élément de la pluralité de couches, les seuils étant des limites supérieures de rapports de réduction des éléments de la pluralité de couches, les seuils étant mis à l'échelle de sorte qu'une norme L2 de seuils de la pluralité de couches devienne égale ou plus petite qu'une limite supérieure de seuil ;
la sélection, pour chacune de la pluralité de couches, d'un candidat de rapport de réduction à appliquer à chacune de la pluralité de couches sur la base d'une pluralité des seuils calculés pour chacune des couches et des erreurs pour chacune des couches dans des tenseurs entre avant et après réduction dans les cas où les éléments sont réduits par chacun d'une pluralité de candidats de rapport de réduction dans chacune de la pluralité de couches ;
la détermination, pour chacune de la pluralité de couches, d'un rapport de réduction à appliquer à chacune de la pluralité de couches sur la base d'une précision d'inférence du modèle entraîné (11c) et d'une précision d'inférence d'un modèle réduit après apprentissage automatique, le modèle réduit étant obtenu en réduisant chaque élément de la pluralité de couches dans le modèle entraîné (11c) selon le candidat de rapport de réduction à appliquer ;
dans lequel le calcul des seuils inclut le réglage d'une valeur initiale de la limite supérieure de seuil de manière à

calculer des seuils qui amène, parmi la pluralité de couches, un élément d'une couche dans laquelle le seuil est maximal à être réduit et qui amène un élément d'une couche autre que la couche dans laquelle le seuil est maximal à ne pas être réduit,
dans lequel la détermination des rapports de réduction inclut :

le rejet d'une pluralité des candidats de rapport de réduction sélectionnés lorsqu'une somme de la précision d'inférence du modèle réduit après apprentissage automatique et d'une marge est inférieure à la précision d'inférence du modèle entraîné (11c) ; et
la détermination d'adopter une pluralité des candidats de rapport de réduction sélectionnés comme les rapports de réduction à appliquer à chacune de la pluralité de couches lorsque la somme de la précision d'inférence du modèle réduit après apprentissage automatique et de la marge est égale ou supérieure à la précision d'inférence du modèle entraîné (11c) ;
dans lequel les rapports de réduction à appliquer à chacune de la pluralité de couches correspondent à un taux d'élagage au niveau de chaque couche,
la répétition de l'exécution du calcul des seuils, de la sélection des candidats de rapport de réduction et de la détermination des rapports de réduction jusqu'à ce que les rapports de réduction satisfassent à une condition prédéterminée,
la délivrance en sortie des rapports de réduction déterminés lorsque la condition prédéterminée est satisfaite, et dans lequel la condition prédéterminée est satisfaite lorsqu'une taille d'une mémoire de l'ordinateur requise pour stocker le modèle réduit atteint une taille saturée de la mémoire.

**6.** Procédé selon la revendication 5, dans lequel le calcul des seuils inclut le calcul des seuils sur la base de valeurs de fonctions de perte du modèle entraîné (11c) à un moment de réduction d'éléments de chacune de la pluralité de couches et de gradients de poids de chacune de la pluralité de couches.

**7.** Procédé selon les revendications 5 ou 6, dans lequel le calcul des seuils inclut :

la diminution de la limite supérieure de seuil lorsque la somme de la précision d'inférence du modèle réduit après apprentissage automatique et de la marge est inférieure à la précision d'inférence du modèle entraîné (11c) ; et
l'augmentation de la limite supérieure de seuil lorsque la somme de la précision d'inférence du modèle réduit après apprentissage automatique et de la marge est égale ou supérieure à la précision d'inférence du modèle entraîné (11c).

**8.** Procédé selon la revendication 7, dans lequel le calcul des seuils inclut la mise à jour de la limite supérieure de seuil de sorte que des combinaisons de candidats de rapport de réduction de la pluralité de couches diffèrent dans chaque exécution de la sélection des candidats de rapport de réduction.

**9.** Appareil de traitement d'informations comprenant un dispositif de commande pour mettre en œuvre un processus comprenant :

le calcul, pour chacune d'une pluralité de couches incluses dans un modèle entraîné (11c) d'un réseau neuronal, de seuils d'erreurs dans des tenseurs entre avant et après réduction, un pour chaque élément de la pluralité de couches, les seuils étant des limites supérieures de rapports de réduction des éléments de la pluralité de couches, les seuils étant mis à l'échelle de sorte qu'une norme L2 de seuils de la pluralité de couches devienne égale ou plus petite qu'une limite supérieure de seuil ;
la sélection, pour chacune de la pluralité de couches, d'un candidat de rapport de réduction à appliquer à chacune de la pluralité de couches sur la base d'une pluralité des seuils calculés pour chacune des couches et des erreurs pour chacune des couches dans des tenseurs entre avant et après réduction dans les cas où les éléments sont réduits par chacun d'une pluralité de candidats de rapport de réduction dans chacune de la pluralité de couches ;
la détermination, pour chacune de la pluralité de couches, d'un rapport de réduction à appliquer à chacune de la pluralité de couches sur la base d'une précision d'inférence du modèle entraîné (11c) et d'une précision d'inférence d'un modèle réduit après apprentissage automatique, le modèle réduit étant obtenu en réduisant chaque élément de la pluralité de couches dans le modèle entraîné (11c) selon le candidat de rapport de réduction à appliquer ;
dans lequel le calcul des seuils inclut le réglage d'une valeur initiale de la limite supérieure de seuil de manière à calculer des seuils qui amène, parmi la pluralité de couches, un élément d'une couche dans laquelle le seuil est maximal à être réduit et qui amène un élément d'une couche autre que la couche dans laquelle le seuil est maximal à ne pas être réduit, dans lequel la détermination des rapports de réduction inclut :

le rejet d'une pluralité des candidats de rapport de réduction sélectionnés lorsqu'une somme de la précision d'inférence du modèle réduit après apprentissage automatique et d'une marge est inférieure à la précision d'inférence du modèle entraîné (11c) ; et
la détermination d'adopter une pluralité des candidats de rapport de réduction sélectionnés comme les rapports de réduction à appliquer à chacune de la pluralité de couches lorsque la somme de la précision d'inférence du modèle réduit après apprentissage automatique et de la marge est égale ou supérieure à la précision d'inférence du modèle entraîné (11c) ;
dans lequel les rapports de réduction à appliquer à chacune de la pluralité de couches correspondent à un taux d'élagage au niveau de chaque couche,
la répétition de l'exécution du calcul des seuils, de la sélection des candidats de rapport de réduction et de la détermination des rapports de réduction jusqu'à ce que les rapports de réduction satisfassent à une condition prédéterminée,
la sortie des rapports de réduction déterminés lorsque la condition prédéterminée est satisfaite, et
dans lequel la condition prédéterminée est satisfaite lorsqu'une taille d'une mémoire de l'ordinateur requise pour stocker le modèle réduit atteint une taille saturée de la mémoire.

FIG.1

100
BN layer
111
112
113
101
102
channel#1
channel#2
channel#n
normalization
scaling
0

FIG.2

121
Image of L1 regularization learning
123
1.3
1.3
-2.5
-6.0
5.8
5.8
2.5
5.1
0.5
0.5
-0.5
9.1
-2.5
-2.5
4.6
-1.1
L1 regularization learning
0
0
0
non Zero
non Zero
non Zero
0
non Zero
0
0
0
non Zero
0
non Zero
non Zero
0
122
Loss function used for L1 regularization learning
$L = \sum_{(x,y)} l(f(x, W), y) + \lambda \sum_{\gamma \in \Gamma} g(\gamma)$
Original loss function (cross entropy, etc.)
L1 regularizer
L1 norm (Σg(γ)=Σ|γ|) is used

FIG.3

130
131
132
133
134
135
136
137
138
139
convolutional layer
BN layer
convolutional layer
BN layer
convolutional layer
convolutional layer
convolutional layer
fully connected layer
fully connected layer
Layers to which identyfying process of FIGS. 1 and 2 is applicable
Layers to which identyfying process of FIGS. 1 and 2 is inapplicable

# FIG.4

1
server
12
obtaining unit
11
memory unit
untrained model
11a
13
machine learning unit
data for machine learning
11b
trained model
11c
14
pruning rate calculating unit
pruning rate
11d
14a
threshold calculating unit
down-sized model
11e
14b
determining unit
15
outputting unit
16:controlling unit

FIG.5

Pruning target model
131
$W_1$
132
$W_2$
133
141
142
Error in $W_1$ caused by pruning
Threshold
$T_{W1}$
20%
40%
60%
Pruning rate
Maximum pruning rate for error smaller than threshold is 40%
→$W_1$ is pruned at 40%
Error in $W_2$ caused by pruning
Threshold
$T_{W2}$
20%
40%
60%
Pruning rate
Maximum pruning rate for error smaller than threshold is 20%
→$W_2$ is pruned at 20%

# FIG.6

143
144
Unpruned model
Pruned model
W1:
No pruning
W2:
No pruning
W1:
40%pruning
W2:
20%pruning
Accwo
Accp
Accwo and Accp+Accm are compared with each other

FIG.7

145
146
147
1st time searching
2nd time searching
3rd time searching
131
132
133
(i) Pruning rate is calculated
(ii) Pruning rate is determined by accuracy comparison
0%
20%
40%
If $Acc_p+Acc_m<Acc_{wo}$, pruning rate is discarded
If $Acc_p+Acc_m \geqq Acc_{wo}$, pruning rate is stored
If $Acc_p+Acc_m \geqq Acc_{wo}$, pruning rate is stored

FIG.8

: Taylor expansion of loss function L(w+Δw) when pruning is perfomed
: Limitaion for loss function to be smaller than ideal value (loss function of FP32) even when pruning is performed
Δw: Errors caused by pruning
Condition on "error in pruning" =Upper limit (threshold) of error caused by pruning, which guarantees accuracy (loss function)
$L(w+\Delta w) \sim L(w)+\frac{\partial L(w)}{\partial w}\Delta w \leq L_{wo}+L_m$
$\Delta w \leq \frac{L_{wo}+L_m-L(w)}{\frac{\partial L(w)}{\partial w}}$
Loss function when pruning is performed
Gradient for each layer (obtained by backpropagation )
$L_{ideal}$: Loss function when pruning is not performed
$L_m$: Margin of loss function set by designer

FIG.9

$\|T_h\|_2$
Error caused by pruning
Upper limit of threshold
Threshold
$\frac{L_{wo} + L_m - L(w)}{\frac{\partial L(w)}{\partial w}} = T$
20%
40%
60%
80%
Pruning rate candidate

FIG.10

Input data
Kernel
Output data
Before pruning
Ch0
H0
W0
Ch0
KW
KH
Ch1 Pieces
Ch1
H1
W1
After pruning
Ch0
H0
W0
Ch0
KW
KH
Ch1-1 Pieces
Ch1-1 Pieces
H1
W1
Kernel where L1 norm was small
Pruning is performed on channel of output datacorresponding to kernel where L1 norm was small

FIG.11

Input data
Kernel
Output data
Before pruning
$Ch_0$
$H_0$
$W_0$
KW
KH
$Ch_1$ Pieces
$Ch_1$
$H_1$
$W_1$
After pruning
$Ch_1$-1 Pieces
$Ch_1$-1 Pieces
L1 norm of kernel of pruning target is calculated and
is divided by number of elements of all kernel before pruning

FIG.12

Input node
Weight
Output node
Before pruning
L1 norms are calculated in units of weights connected to output nodes (L1 norms are calculated in units of solid lines, dashed lines, and dash-dot lines)
After pruning
In accordance with set pruning rate and in ascending order of calculated L1 norms, corresponding output node is pruned
Pruning is performed on output node corresponding to weight where L1 norm was small
Weight group where L1 norm was small

FIG.13

Input node
Weight
Output node
Before pruning
After pruning
L1 norm of weight group of pruning target is calculated and is divided by number of elements of all weights before pruning
(L1 norm of weight group of dash-dot-dot line is calculated and L1 norm is divided by number of elements of all weights before pruning=6)

FIG.14

Input node
Weight
Output node
Before pruning
L1 norms are calculated in units of elements for all weights (when number of elements of weight=6, 6 L1 norms are calculated)
After pruning
In accordance with set pruning rate and in ascending order of calculated L1 norms, corresponding weight is pruned
Pruning is performed on weight where L1 norm was small

FIG.15

Input node
Weight
Output node
Before pruning
After pruning
L1 norm of weight of pruning target is calculated and is divided by number of elements of all weights before pruning
(L1 norm of weight of dashed line is calculated and L1 norm is divided by number of elements of all weights before pruning=6)
Pruning is performed on weight where L1 norm was small

FIG.16

START
Machine learning is performed for untrained model without pruning
S1
Accuracy $Acc_{wo}$ in cases where pruning is not performed is calculated
S2
Initial value of trust radius is set
S3
Threshold for each layer is calculated
S4
L2 norm of thresholds of all layers > trust radius?
S5
YES
NO
Threshold is scaled such that L2 norms of thresholds of all layers become equal to trust radius
S6
Pruning rate for each layer is provisionally calculated
S7
Trained model is pruned at provisionally calculated pruning rate and undergoes machine learning again, and then, accuracy $Acc_p$ is calculated
S8
$Acc_p + Acc_m \geqq Acc_{wo}$ ?
S9
NO
YES
Trained model is determined to be pruned by provisinally calculated pruning rates
S10
Trust radius is increased by being multiplied by constant factor
S11
Provisinally calculated pruning rates are discarded
S12
Trust radius is decreased by being multiplied by constant factor
S13
Has search been performed predetermined times?
S14
NO
YES
Determined pruning rates are outputted
S15
END

FIG.17

150
151
152
153
154
155
156
157
158
convolutional layer 1
convolutional layer 2
convolutional layer 3
convolutional layer 4
convolutional layer 5
fully connected layer 1
fully connected layer 2
fully connected layer 3
Convolutional layers to which no BN layer is connected →Channel pruning
Fully connected layers →Node pruning

FIG.18

| Dataset | Model | Set Recognition Rate Margin | Recognition Rate Without Pruning | Recognition Rate With Pruning | Global Pruning Rate | Compression Rate of Model Data Volume by Pruning |
|---|---|---|---|---|---|---|
| CIFAR-10 | AlexNet | 1% | 83.6 % | 82.9 % | 82.9 % | 94.0 % (285MB ⇒ 17.0MB) |
| CIFAR-10 | AlexNet | 2% | 83.6 % | 82.0 % | 82.0 % | 96.9% (285MB ⇒ 8.9MB) |

# FIG.19

Example of data size of model
model size (MB)
300
250
200
150
100
50
0
0
5
10
15
20
times of searches

# FIG.20

Pruning rate (entire model)

100
90
80
70
60
50
40
30
20
10
0
global pruning rate (%)
0
5
10
15
20
times of searches


$$\text{Pruning rate of entire model} = \frac{\text{Number of channels after pruning} + \text{number of all nodes}}{\text{Number of channels before pruning} + \text{number of all nodes}}$$

# FIG.21

Pruning rate (for each layer)

fc1,fc2
Conv4,Conv5
Conv2,Conv3
Conv1
conv1
conv2
conv3
conv4
conv5
fc1
fc2
local pruning rate (%)
times of searches
100
90
80
70
60
50
40
30
20
10
0
0
5
10
15
20

$$\text{Pruning rate for each layer} = \frac{\text{Number of channels (number of nodes) after pruning}}{\text{Number of channels (number of nodes) before pruning}}$$

FIG.22

| Dataset | conv1 | conv2 | conv3 | conv4 | conv5 | fc1 | fc2 |
|---|---|---|---|---|---|---|---|
| Before pruning | 64 | 256 | 384 | 256 | 256 | 4096 | 4096 |
| After pruning (margin 1%) | 41 35.9% | 147 42.6% | 221 42.4% | 118 53.9% | 118 53.9% | 550 86.6% | 550 86.6% |
| After pruning (margin 2%) | 37 42.2% | 118 53.9% | 158 58.9% | 105 59.0% | 85 66.8% | 352 91.4% | 352 91.4% |

# FIG.23

Times of searches=20
Times of searches=200
model size [MB]
100
90
80
70
60
50
40
30
20
10
0
0
50
100
150
200
times of searches

# FIG.24

Result of error comparison at "m"th search
Error caused by pruning
Trust radius
Threshold
20%
10%
Pruning rate
Pruning rate 10% is assumed to be calculated
Trust radius is updated so as to increase
Trust radius
Result of error comparison at "m+1"th search
Trust radius
Threshold
20%
10%
Pruning rate
Update amount of threshold is limited by trust radius and pruning rate 10% is selected again

FIG.25

1A
server
11
memory unit
12
obtaining unit
untrained model
11a
13
machine learning unit
data for machine learning
11b
trained model
11c
14A
pruning rate calculating unit
pruning rate
11d
14a'
threshold calculating unit
down-sized model
11e
14b'
determining unit
15
outputting unit
16:controlling unit

FIG.26

Result of error comparison in layer 1
Result of error comparison in layer 2
"m"th time
Error caused by pruning
$E_{diff,1}$
Trust radius
Threshold of layer 1
20%
10%
Pruning rate
$E_{diff,2}$
Trust radius
Threshold of layer 2
20%
10%
0%
Pruning rate
Searched pruning rates (layer 1, layer 2) =(10%, 0%)
"m+1"th time
Error caused by pruning
Trust radius
Threshold of layer 1
20%
10%
Pruning rate
Trust radius
Threshold of layer 2
20%
10%
0%
Pruning rate
Searched pruning rates (layer 1, layer 2) =(10%, 10%)
In case of increasing trust radius

FIG.27

Result of error comparison in layer 1
Result of error comparison in layer 2
"m"th time
"m+1"th time
Error caused by pruning
E diff,1
E diff,2
Trust radius
Threshold of layer 1
Threshold of layer 2
20%
10%
0%
Pruning rate
Searched pruning rates (layer 1, layer 2) =(10%, 0%)
Searched pruning rates (layer 1, layer 2) =(0%, 0%)
In case of decreasing trust radius

FIG.28

START
Machine learning is performed for untrained model without pruning
S1
Accuracy $Acc_{wo}$ in cases where pruning is not performed is calculated
S2
Initial value of trust radius is set
S3
Threshold for each layer is calculated
S4
L2 norm of thresholds of all layers > trust radius?
S5
YES
NO
Threshold is scaled such that L2 norms of thresholds of all layers become equal to trust radius
S6
Pruning rate for each layer is provisionally calculated
S7
Trained model is pruned at provisionally calculated pruning rate and undergoes machine learning again, and then, accuracy $Acc_p$ is calculated
S8
$Acc_p + Acc_m \geqq Acc_{wo}$ ?
S9
NO
YES
Trained model is determined to be pruned by provisinally calculated pruning rates
S10
Provisinally calculated pruning rates are discarded
S12
Trust radius is increased by using larger one of constant factor and sum of different amount
S21
Trust radius is decreased by using larger one of constant factor and difference of different amount
S22
Is pruning rate 0% in all layers?
S23
NO
YES
Determined pruning rates are outputted
S15
END

# FIG.29

Times of searches=20
Times of searches=200
First modification
model size [MB]
100
90
80
70
60
50
40
30
20
10
0
0
50
100
150
200
times of searches


Searching ends when model size is sufficiently diminished (when pruning rate becomes equal to 0%)

# FIG.30

Model size (MB) when searching pruning rates
model size (MB)
120
100
80
60
40
20
0
0
5
10
15
20
25
30
times of seaches for pruning rates
Initial value of trust radius is set to be large
Initial value of trust radius is set to be small

# FIG.31

1B
server
12
obtaining unit
13
machine learning unit
14B
pruning rate calculating unit
14a″
threshold calculating unit
14b″
determining unit
15
outputting unit
11
memory unit
untrained model
11a
data for machine learning
11b
trained model
11c
pruning rate
11d
down-sized model
11e
16:controlling unit

FIG.32

Error in layer 1
Error caused by pruning
Initial value of threshold for layer 1: T1
20% 10% 0%
Pruning rate
Combination of searched pruning rates:
(layer 1, layer 2)=(10%, 20%)
Error in layer 2
Initial value of threshold for layer 2 T2
=max(Th)
※ Th=[T1, T2]
Error
: Error in minimum pruning rate of layer where threshold is maximum
20% 10% 0%
Pruning rate
Threshold of layer (layer 2) where threshold is maximum and error in minimum pruning rate (10%) of that layer are measured

Error caused by pruning
Trust radius
Threshold of layer 1
20% 10% 0%
Pruning rate
Trust radius
Threshold of layer 2
20% 10% 0%
Pruning rate
Initial value of trust radius is set using measured threshold and error
Initial value of trust radius
$\frac{Error}{\max(T_h)} \cdot \|T_h\|_2$
Combination of searched pruning rates:
(layer 1, layer 2)=(0%, 10%)

FIG.33

START
Machine learning is performed for untrained model without pruning
S1
Accuracy $Acc_{wo}$ in cases where pruning is not performed is calculated
S2
Initial value of trust radius is set
S3
Threshold for each layer is calculated
S4
First search?
S31
YES
NO
Initial value of trust radius is set based on threshold and minimum pruning rate error of layer where threshold is maximum
S32
Pruning rate for each layer is provisionally calculated
S7
Trained model is pruned at provisionally calculated pruning rate and undergoes machine learning again, and then, accuracy $Acc_p$ is calculated
S8
$Acc_p + Acc_m \geqq Acc_{wo}$ ?
S9
NO
YES
Trained model is determined to be pruned by provisinally calculated pruning rates
S10
Trust radius is increased
S33
Provisinally calculated pruning rates are discarded
S12
Trust radius is decreased
S34
Has search been performed predetermined times? Or is pruning rate of all layers 0%?
S35
NO
YES
Determined pruning rates are outputted
S15
END

# FIG.34

Model size (MB) when searching pruning rates
model size (MB)
140
120
100
80
60
40
20
0
0
5
10
15
20
25
30
times of seaches for pruning rates
Initial value of trust radius is set to be large
Initial value of trust radius is set to be small
Second modification

FIG.35

10
computer
10a
processor
10c
storing unit
10e
IO (Input/ Output) unit
10i
10b
memory
10d
IF (Interface) unit
10f
reader
10c
storing unit
program
10g
10h

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190057308 A
- US 20180232640 A
- JP 2021047854 A
- JP 2020123269 A
- JP 2021022050 A
- US 20190080238 A
- US 20190205759 A
- US 20200184333 A


### Non-patent literature cited in the description


- **SINGH PRAVENDRA et al.** *Play and Prune: Adaptive Filter Pruning for Deep Model Compression*, 11 May 2019
- **PAVLO MOLCHANOV et al.** *PRUNING CONVOLUTIONAL NEURAL NETWORKS FOR RESOURCE EFFICIENT INFERENCE*, 08 June 2017